(19) Europäisches Patentamt / European Patent Office / Office européen des brevets

(11) EP 4 598 153 A1

(12) **EUROPEAN PATENT APPLICATION**
published in accordance with Art. 153(4) EPC

(43) Date of publication:
**06.08.2025 Bulletin 2025/32**

(21) Application number: **23873210.1**

(22) Date of filing: **27.09.2023**

(51) International Patent Classification (IPC):
***H04W 52/26*** *(2009.01)* ***H04W 52/34*** *(2009.01)*

(52) Cooperative Patent Classification (CPC):
**H04W 52/26; H04W 52/34**

(86) International application number:
**PCT/KR2023/015042**

(87) International publication number:
**WO 2024/072101 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 US 202263411145 P**
**23.02.2023 US 202363447639 P**

(71) Applicant: **LG Electronics Inc.**
**Yeongdeungpo-gu**
**Seoul 07336 (KR)**

(72) Inventors:
- **YANG, Yoonoh**
  **Seoul 06772 (KR)**
- **LEE, Sangwook**
  **Seoul 06772 (KR)**
- **HUH, Joongkwan**
  **Seoul 06772 (KR)**
- **HWANG, Jinyup**
  **Seoul 06772 (KR)**
- **PARK, Jinwoong**
  **Seoul 06772 (KR)**
- **NA, Yunsik**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **MAXIMUM POWER REDUCTION**

(57) One disclosure of the present specification provides a user equipment (UE). The UE comprises: a transceiver for transmitting/receiving a signal; and a processor for controlling the transceiver, wherein the UE is a power class 3 UE, the transceiver is configured to satisfy A-MPR, the transceiver transmits an uplink signal to a base station, and the A-MPR is based on pre-coding, modulation method, channel bandwidth and RB allocation method.

FIG. 26

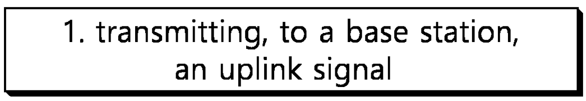


EP 4 598 153 A1

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

In 5G NR, a terminal may determine the transmission power by applying maximum output power requirements (or, requirements). For example, the maximum output power requirement can be a Maximum Power Reduction (MPR) value.

Power class refers to the maximum power for all transmission bandwidths within the channel bandwidth of an NR carrier, and is measured in one subframe (1ms) period.

A-MPR values are required for unlicensed band power class 3 terminals.

### DISCLOSURE

### TECHNICAL SOLUTION

A-MPR values for unlicensed band power class 3 terminals are proposed.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a diagram showing an example of a communication structure that can be provided in a 6G system.
FIG. 5 shows an example of an electromagnetic spectrum.
FIG. 6 is a wireless communication system.
FIG. 7 illustrates the structure of a radio frame used in NR.
FIG. 8 shows an example of subframe types in NR.
FIGS. 9a and 9b show examples of methods for limiting transmission power of a terminal.
FIG. 10 shows examples of center frequencies available in n96.
FIG. 11 shows the Tx power backoff for 1Tx (23dBm) at CBW of 20MHz.
FIG. 12 shows the Tx power backoff for 1Tx (23dBm) at CBW of 40MHz.
FIG. 13 shows the Tx power backoff for 1Tx (23dBm) at CBW of 60MHz.
FIG. 14 shows the Tx power backoff for 1Tx (23dBm) at CBW of 80MHz.
FIG. 15 shows the Tx power backoff for 1Tx (23dBm) at CBW of 100MHz.
FIG. 16 shows the Tx power backoff for 2Tx (2x20dBm) at CBW of 20MHz.
FIG. 17 shows the Tx power backoff for 2Tx (2x20dBm) at CBW of 40MHz.
FIG. 18 shows the Tx power backoff for 2Tx (2x20dBm) at CBW of 60MHz.
FIG. 19 shows the Tx power backoff for 2Tx (2x20dBm) at CBW of 80MHz.

FIG. 20 shows the Tx power backoff for 2Tx (2x20dBm) at CBW of 100MHz.
FIG. 21 shows the Tx power backoff for 1Tx (23dBm) at CBW of 40MHz.
FIG. 22 shows the Tx power backoff for 1Tx (23dBm) at CBW of 80MHz.
FIG. 23 shows the Tx power backoff for 2Tx (2x20dBm) at CBW of 40MHz.
FIG. 24 shows the Tx power backoff for 2Tx (2x20dBm) at CBW of 80MHz.
FIG. 25 shows the reverse IMD at 2Tx with 10dB of antenna isolation.
FIG. 26 shows the procedure of the UE for the disclosure of this specification.
FIG. 27 shows the procedure of the base station for the disclosure of this specification.

## MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

**FIG. 1 shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an ARIVR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

[Table 1]

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NK system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

**FIG. 2 shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

**FIG. 3 shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel® or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

**<6G System General>**

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 3 below. That is, Table 3 shows the requirements of the 6G system.

[Table 3]

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

**FIG. 4 is a diagram showing an example of a communication structure that can be provided in a 6G system.**

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.

- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

**<Core implementation technology of 6G system>**

Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural networks (SNN). Such a learning model is applicable.

THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

**FIG. 5 shows an example of an electromagnetic spectrum.**

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

Optical wireless technology

Optical wireless communication (OWC) is a form of optical communication that uses visible light, infrared light (IR), or ultraviolet light (UV) to transmit signals. OWC that operates in the visible light band (e.g., 390 to 750 nm) is commonly referred to as visible light communication (VLC). VLC implementations may utilize light-emitting diodes (LEDs). VLC can be used in a variety of applications, including wireless local area networks, wireless personal communications networks, and vehicular networks.

VLC has the following advantages over RF-based technologies. First, the spectrum occupied by VLC is free/unlicensed and can provide a wide range of bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communications security and privacy. The transmission medium of VLC-based networks, i.e., visible light, cannot penetrate walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSOs can operate in the near-infrared frequencies (750-1600 nm). Laser transmitters can be used in FSO implementations, and FSO can provide high data rates (e.g., 10 Gbit/s), offering a potential solution to backhaul bottlenecks.

These OWC technologies are planned for 6G communications, in addition to RF-based communications for any possible device-to-access network. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) can also be utilized for ultra-high resolution 3D mapping in 6G communications based on the optical band. LiDAR is a remote sensing method that uses near-infrared, visible, and ultraviolet light to shine a light on an object, and the reflected light is detected by a light sensor to measure distance. LiDAR can be used for fully automated driving of cars.

FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

Non-Terrestrial Networks (NTN)

6G systems will integrate terrestrial and aerial networks to support vertically expanding user communications. 3D BS will be provided via low-orbit satellites and UAVs. Adding a new dimension in terms of altitude and associated degrees of freedom makes 3D connectivity quite different from traditional 2D networks. NR considers Non-Terrestrial Networks (NTNs) as one way to do this. An NTN is a network or network segment that uses RF resources aboard a satellite (or UAS platform). There are two common scenarios for NTNs that provide access to user equipment: transparent payloads and regenerative payloads. The following are the basic elements of an NTN

- One or multiple sat-gateways connecting the NTN to the public data network.
- GEO satellites are fed by one or multiple satellite gateways deployed across the satellite target range (e.g., regional or continental coverage). We assume that a UE in a cell is served by only one sat-gateway.
- Non-GEO satellites that are continuously served by one or multiple satellite gateways at a time. The system shall ensure service and feeder link continuity between successive servicing satellite gateways with a time duration sufficient to allow mobility anchoring and handover to proceed.
- The feeder link or radio link between the satellite gateway and the satellite (or UAS platform).
- Service link or radio link between user equipment and the satellite (or UAS platform).
- Satellite (or UAS platform) capable of implementing transparent or regenerative (including onboard processing) payloads. Satellite (or UAS platform) generated beam A satellite (or UAS platform) generates multiple beams for a given service area, typically based on its field of view. The footprint of a beam is typically elliptical. The field of view of the satellite (or UAS platform) depends on the onboard antenna diagram and the minimum angle of attack.

- Transparent payload: Radio frequency filtering, frequency conversion, and amplification. Therefore, the waveform signal repeated by the payload remains unchanged.
- Regenerative payload: Radio frequency filtering, frequency conversion and amplification, demodulation/decryption, switching and/or routing, and coding/modulation. This is effectively the same as carrying all or part of the base station functions (e.g., gNB) on board a satellite (or UAS platform).
- Optionally, for satellite deployments, an inter-satellite link (ISL). This requires a regenerative payload on the satellite. ISL can operate at RF frequencies or in the optical band.
- The user equipment is serviced by the satellite (or UAS platform) within the targeted coverage area.

Typically, GEO satellites and UAS are used to provide continental, regional, or local services.

Typically, constellations in LEO and MEO are used to provide service in both the Northern and Southern Hemispheres. In some cases, constellations can also provide global coverage, including polar regions. The latter requires proper orbital inclination, sufficient beams generated, and links between satellites.

<u>Quantum Communication</u>

Quantum communication is a next-generation communication technology that can overcome the limitations of existing communication technologies such as security and ultra-high-speed computation by applying quantum mechanical properties to the field of information and communication. Quantum communication provides a means of generating, transmitting, processing, and storing information that cannot be expressed in the form of 0s and 1s according to the binary bit information used in conventional communication technologies. In conventional communication technologies, wavelengths or amplitudes are used to transmit information between the sender and receiver, but in quantum communication, photons, the smallest unit of light, are used to transmit information between the sender and receiver. In particular, in the case of quantum communication, quantum uncertainty and quantum irreversibility can be used for the polarization or phase difference of photons (light), so quantum communication has the characteristic of being able to communicate with perfect security. Quantum communication may also enable ultrafast communication using quantum entanglement under certain conditions.

<u>Cell-free Communication</u>

The tight integration of multiple frequencies and heterogeneous communication technologies is crucial for 6G systems. As a result, users will be able to seamlessly move from one network to another without having to create any manual configurations on their devices. The best network is automatically selected from the available communication technologies. This will break the limitations of the cell concept in wireless communications. Currently, the movement of users from one cell to another causes too many handovers in dense networks, resulting in handover failures, handover delays, data loss, and ping-pong effects. 6G cell-free communications will overcome all of these and provide better QoS.

Cell-free communication is defined as "a system in which multiple geographically distributed antennas (APs) cooperatively serve a small number of terminals using the same time/frequency resources with the help of a fronthaul network and a CPU." A single terminal is served by a set of multiple APs, called an AP cluster. There are several ways to form AP clusters, among which the method of organizing AP clusters with APs that can significantly contribute to improving the reception performance of a terminal is called the terminal-centric clustering method, and the configuration is dynamically updated as the terminal moves. This device-centric AP clustering technique ensures that the device is always at the center of the AP cluster and is therefore immune to inter-cluster interference that can occur when a device is located at the boundary of an AP cluster. This cell-free communication will be achieved through multi-connectivity and multi-tier hybrid technologies and different heterogeneous radios in the device.

<u>Integration of Wireless Information and Energy Transfer (WIET)</u>

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

<u>Integration of Wireless Communication and Sensing</u>

An autonomous wireless network is a function for continuously detecting a dynamically changing environment state and exchanging information between different nodes. In 6G, sensing will be tightly integrated with communication to support autonomous systems.

Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

Reconfigurable Intelligent Metasurface

There has been a large body of research that considers the radio environment as a variable to be optimized along with the transmitter and receiver. The radio environment created by this approach is referred to as a Smart Radio Environment (SRE) or Intelligent Radio Environment (IRE) to emphasize its fundamental difference from past design and optimization criteria. Various terms have been proposed for reconfigurable intelligent antenna (or intelligent reconfigurable antenna technology) technologies to enable SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).

In the case of THz band signals, there are many shadowed areas caused by obstacles due to the strong straightness of the signal, and RIS technology is important to expand the communication area by installing RIS near these shadowed areas to enhance communication stability and provide additional value-added services. RIS is an artificial surface made of electromagnetic materials that can alter the propagation of incoming and outgoing radio waves. Although RIS can be seen as an extension of massive MIMO, it has a different array structure and operating mechanism than massive MIMO. RIS has the advantage of low power consumption because it operates as a reconfigurable reflector with passive elements, i.e., it only passively reflects signals without using active RF chains. Furthermore, each of the passive reflectors in the RIS must independently adjust the phase shift of the incoming signal, which can be advantageous for the wireless communication channel. By properly adjusting the phase shift through the RIS controller, the reflected signals can be gathered at the target receiver to boost the received signal power.

In addition to reflecting radio signals, there are also RISs that can tune transmission and refractive properties, and these RISs are often used for outdoor to indoor (O2I) applications. Recently, STAR-RIS (Simultaneous Transmission and Reflection RIS), which provides transmission at the same time as reflection, has also been actively researched.

Metaverse

Metaverse is a combination of the words "meta" meaning virtual, transcendent, and "universe" meaning space. Generally speaking, the term is used to describe a three-dimensional virtual space in which social and economic activities are the same as in the real world.

Extended Reality (XR), a key technology that enables the metaverse, is the fusion of the virtual and the real, which can extend the experience of reality and provide a unique immersive experience. The high bandwidth and low latency of 6G networks will enable users to experience more immersive virtual reality (VR) and augmented reality (AR) experiences.

Autonomous Driving (Self-driving)

For fully autonomous driving, vehicles need to communicate with each other to alert each other to dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), in order to drive autonomously.

In order to maximize the performance of autonomous driving and ensure high safety, fast transmission speeds and low latency technologies are essential. In addition, in the future, autonomous driving will go beyond delivering warnings and guidance messages to the driver to actively intervene in the operation of the vehicle and directly control the vehicle in dangerous situations, and the amount of information that needs to be transmitted and received will be enormous, so 6G is expected to maximize autonomous driving with faster transmission speeds and lower latency than 5G.

Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

**FIG. 6 is a wireless communication system.**

As can be seen with reference to FIG. 6, the wireless communication system includes at least one base station (BS). The BS is divided into a gNodeB (or gNB) (20a) and an eNodeB (or eNB) (20b). The gNB (20a) supports 5th generation mobile communication. The eNB (20b) supports 4th generation mobile communication, i.e., LTE (long term evolution).

Each base station (20a and 20b) provides a communication service for a specific geographical area (generally called a cell) (20-1, 20-2, 20-3). The cell can be divided into a plurality of areas (called sectors).

A UE typically belongs to one cell, and the cell to which the UE belongs is called a serving cell. A base station that provides a communication service for a serving cell is called a serving base station (serving BS). Since the wireless communication system is a cellular system, there are other cells adjacent to the serving cell. The other cells adjacent to the serving cell are called neighbor cells. The base station that provides communication services to the neighbor cell is called a neighbor BS. The serving cell and the neighbor cell are determined relatively based on the UE.

Hereinafter, the downlink means communication from the base station (20) to the UE (10), and the uplink means communication from the UE (10) to the base station (20). In the downlink, the transmitter may be part of the base station (20), and the receiver may be part of the UE (10). In the uplink, the transmitter may be part of the UE (10), and the receiver may be part of the base station (20).

Meanwhile, the wireless communication system can be largely divided into the FDD (frequency division duplex) method and the TDD (time division duplex) method. According to the FDD method, uplink transmission and downlink transmission are performed while occupying different frequency bands. In the TDD method, uplink transmission and downlink transmission occupy the same frequency band and are performed at different times. The channel response of the TDD method is practically reciprocal. This means that the downlink channel response and the uplink channel response are almost the same in a given frequency range. Therefore, in a wireless communication system based on TDD, the downlink channel response has the advantage of being obtained from the uplink channel response. Since the entire frequency band is time-divided into uplink transmission and downlink transmission, the downlink transmission by the base station and the uplink transmission by the UE cannot be performed simultaneously. In a TDD system where uplink transmission and downlink transmission are divided into subframe units, uplink transmission and downlink transmission are performed in different subframes.

**<Operating Band in NR>**

The operating band in NR is as follows.

The operating band in Table 4 below is the operating band that has been refarmed from the operating band of LTE/LTE-A. This is called the FR1 band.

[Table 4]

| NR operating band | Uplink (UL) operating band | Downlink (DL) operating band | Duplex Mode |
|---|---|---|---|
| | $F_{UL_low}$ - $F_{UL_high}$ | $F_{DL_low}$ - $F_{DL_high}$ | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD1 |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

The table below shows the NR operating band defined at high frequencies. This is called the FR2 band.

[Table 5]

| NR operating band | Uplink (UL) operating band | Downlink (DL) operating band | Duplex Mode |
|---|---|---|---|
| | $F_{UL_low}$ - $F_{UL_high}$ | $F_{DL_low}$ - $F_{DL_high}$ | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |
| n260 | 37000 MHz - 40000 MHz | 37000 MHz - 40000 MHz | FDD |
| n261 | 27500 MHz - 28350 MHz | 27500 MHz - 28350 MHz | FDD |

**FIG. 7 illustrates the structure of a radio frame used in NR.**

In NR, uplink and downlink transmissions are composed of frames. A radio frame has a length of 10 ms and is defined by two 5 ms half-frames (Half-Frames, HF). A half-frame is defined by five 1 ms subframes (Subframes, SF). A subframe is divided into one or more slots, and the number of slots in a subframe depends on the SCS (Subcarrier Spacing). Each slot contains 12 or 14 OFDM (A) symbols depending on the CP (cyclic prefix). When a normal CP is used, each slot contains 14 symbols. When an extended CP is used, each slot contains 12 symbols. Here, a symbol may include an OFDM symbol (or a CP-OFDM symbol), an SC-FDMA symbol (or a DFT-s-OFDM symbol).

**FIG. 8 shows an example of subframe types in NR.**

The TTI (transmission time interval) illustrated in FIG. 8 may be called a subframe or slot for NR (or new RAT). The subframe (or slot) of FIG. 6 may be used in a TDD system of NR (or new RAT) to minimize data transmission delay. As illustrated in FIG. 4, the subframe (or slot) includes 14 symbols, similar to the current subframe. The symbols in the front of the subframe (or slot) may be used for a DL control channel, and the symbols in the back of the subframe (or slot) may be used for a UL control channel. The remaining symbols may be used for DL data transmission or UL data transmission. According to this subframe (or slot) structure, downlink transmission and uplink transmission may be sequentially performed in one subframe (or slot). Therefore, downlink data may be received within a subframe (or slot), and an uplink acknowledgement (ACK/NACK) may be transmitted within the subframe (or slot).

The structure of such subframes (or slots) may be called a self-contained subframe (or slot).

Specifically, the first N symbols in the slot may be used to transmit a DL control channel (hereinafter, DL control region), and the last M symbols in the slot may be used to transmit a UL control channel (hereinafter, UL control region). N and M are each integers greater than or equal to 0. The resource region (hereinafter, data region) between the DL control region and the UL control region may be used for DL data transmission or UL data transmission. For example, a PDCCH may be transmitted in the DL control region, and a PDSCH may be transmitted in the DL data region. A PUCCH may be transmitted in the UL control region, and a PUSCH may be transmitted in the UL data region.

Using such a structure of subframes (or slots) has the advantage of minimizing the final data transmission waiting time by reducing the time taken to retransmit data in which a reception error has occurred. In such a self-contained subframe (or slot) structure, a time gap may be required for the transition process from transmit mode to receive mode or from receive mode to transmit mode. For this purpose, some OFDM symbols when switching from DL to UL in the subframe structure can be set as a guard period (GP).

**<Support for various numerologies>**

A numerology may be defined by the CP (cycle prefix) length and the subcarrier spacing (SCS). A cell may provide multiple numerologies to a terminal. When the index of a numerology is represented as $\mu$, each subcarrier spacing and the corresponding CP length may be as shown in the table below.

[Table 6]

| $\mu$ | $f=2^{\mu}15$ [kHz] | CP |
|---|---|---|
| 0 | 15 | normal |
| 1 | 30 | normal |
| 2 | 60 | normal, extended |
| 3 | 120 | normal |
| 4 | 240 | normal |

For general CP, when the index of numerology is represented as $\mu$, the number of OFDM symbols per slot ($N^{slot}_{symb}$), the number of slots per frame ($N^{frame,\mu}_{slot}$), and the number of slots per subframe ($N^{subframe,\mu}_{slot}$) are as shown in the table below.

[Table 7]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

In the case of extended CP, when the index of the numerology is represented as $\mu$, the number of OFDM symbols per slot ($N^{slot}_{symb}$), the number of slots per frame ($N^{frame,\mu}_{slot}$), and the number of slots per subframe ($N^{subframe,\mu}_{slot}$) are as shown in the table below.

[Table 8]

| $\mu$ | $N^{slot}_{syrnb}$ | $N^{frame,\mu}_{slot}$ | $N^{subframe,\mu}_{slot}$ |
|---|---|---|---|
| 2 | 12 | 40 | 4 |

**<Maximum output power>**

The following UE power classes define the maximum output power for all transmission bandwidths within the channel bandwidth of a shared spectrum channel access carrier, unless otherwise specified. The measurement period shall be at least one subframe (1 ms).

[Table 9]

| NR ban d | Class 1 (dBm) | Tolerance (dB) | Class 2 (dBm) | Tolerance (dB) | Class 3 (dBm) | Tolerance (dB) | Class 5 (dBm) | Tolerance (dB) |
|---|---|---|---|---|---|---|---|---|
| n46 | | | | | | | 20 | +2/-3 |
| n96 | | | | | | | 20 | +2/-3 |
| n10 2 | | | | | | | 20 | +2/-3 |
| NOTE 1: $P_{PowerClass}$ is the maximum UE power specified without taking into account the tolerance<br>NOTE 2: Power class 5 is default power class unless otherwise stated. | | | | | | | | |

The UE operation shall meet the following additional requirements for the maximum mean transmission power density specified in Table 10 when the NS receives the signal and the transmission overlaps part of a specific frequency range. If the transmission overlaps multiple frequency ranges, the lowest power density requirement applies.

[Table 10]

| NR Band | NS value | Channel bandwidth (MHz) | Frequency range (MHz) | Maximum mean power density (dBm/MHz) |
|---|---|---|---|---|
| n46 | NS_28 | 20, 40, 60, 80 | 5150 - 5350 | 10 |
| | | | 5470 - 5725 | |
| | NS_29 | 20 | 5170 - 5330 | 10 |
| | | | 5490 - 5730 | |
| | | 40 | 5170 - 5330 | 7 |

(continued)

| NR Band | NS value | Channel bandwidth (MHz) | Frequency range (MHz) | Maximum mean power density (dBm/MHz) |
|---|---|---|---|---|
| | | | 5490 - 5730 | |
| | | 60, 80 | 5170 - 5330 | 4 |
| | | | 5490 - 5730 | |
| | NS_30 | 20, 40, 60, 80 | 5150 - 5350 | 11 |
| | | | 5470 - 5725 | |
| | NS_31 | 20 | 5150 - 5230 | 10 |
| | | | 5250 - 5350 | |
| | | | 5470 - 5725 | |
| | | | 5725 - 5850 | |
| | | | 5230 - 5250 | 4 |
| | | 40 | 5150 - 5230 | 7 |
| | | | 5250 - 5350 | |
| | | | 5470 - 5725 | |
| | | | 5725 - 5850 | |
| | | | 5230 - 5250 | 4 |
| | | 60, 80 | 5150 - 5230 | 4 |
| | | | 5250 - 5350 | |
| | | | 5470 - 5725 | |
| | | | 5725 - 5850 | |
| | | | 5230 - 5250 | |
| n96 | NS_53 | 20, 40, 60, 80 | 5925 - 7125 | -1 |
| | NS_54 | 20, 40, 60, 80 | 5925 - 6425 | 17 |
| | | | 6525 - 6875 | |
| | NS_59 | 20, 40, 60, 80 | 5925 - 7125 | 5 |
| | NS_60 | 20, 40, 60, 80 | 5925 - 7125 | 2 |
| | NS_61 | 20, 40, 60, 80 | 5925 - 6425 | 1 |
| n102 | NS_58 | 20, 40, 60, 80 | 5945 - 6425 | 10 |

For NS_61, it may correspond to the n96 band. For NS_61, the channel bandwidth (CBW) may be 20, 40, 60, or 80 MHz. For NS_61, the frequency range may be 5925-6425 MHz.

**<Maximum Power Reduction (MPR) and allowed Additional MPR (A-MPR)>**

**FIGS. 9a and 9b show examples of methods for limiting transmission power of a terminal.**

Referring to FIG. 9a, the terminal (100) may perform transmission with limited transmission power. For example, the terminal (100) may perform uplink transmission to a base station with reduced transmission power.

When the PAPR (peak-to-average power ratio) value of a signal transmitted from a terminal (100) increases, in order to limit the transmission power, the terminal (100) can reduce the linearity of the power amplifier (PA) inside the transceiver of the terminal (100) by applying the MPR (maximum output power reduction) value to the transmission power.

Referring to FIG. 9b, a base station (BS) can request the terminal (100) to apply the MPR (maximum power reduction) by transmitting an NS (Network Signal) to the terminal (100). The MPR is an operation in which the base station transmits the NS to the terminal (100) operating in a specific operating band so that the terminal performs power reduction. That is, the terminal to which the MPR is applied determines the transmission power by applying the MPR when receiving the NS.

**<Disclosure of the present specification>**

The UE may set the maximum output power $P_{CMAX,f,c}$ configured for the carrier f of the serving cell c in each slot. The configured maximum output power $P_{CMAX,f,c}$ may be set within the following ranges:

-

$$P_{CMAX_L,f,c} \leq P_{CMAX,f,c} \leq P_{CMAX_H,f,c}$$

with

$P_{CMAX_L,f,c}$ = MIN {PEMAX,c- $\triangle T_{C,c}$, ($P_{PowerClass}$ - $\triangle P_{PowerClass}$) - MAX(MAX($MPR_c$+$\triangle MPR_c$, A-$MPR_c$)+ $\triangle T_{IB,c}$ + $\triangle T_{C,c}$ + $\triangle T_{RxSRS}$, P-$MPR_c$) }

-

$$P_{CMAX_H,f,c} = \text{MIN } \{P_{EMAX,c},\ P_{PowerClass} - \Delta P_{PowerClass}\}$$

$P_{EMAX,c}$ may be a value provided by one of the applicable p-Max IE or additionalPmax field of the NR-NS-PmaxList IE.

$P_{PowerClass}$ may be the maximum UE power specified in Table 9 for shared spectrum access operation, without taking into account the tolerances specified in Table 9 for shared spectrum access operation.

When IE powerBoostPi2BPSK is set to 1, $P_{EMAX,c}$ is increased by +3 dB for power class 3 capable UEs operating in TDD bands n40, n41, n77, n78 and n79 using PI/2 BPSK modulation, and the UE indicates support for the UE capability powerBoosting-pi2BPSK, and when PEMAX,c ≥ 20 dBm, not more than 40% of the symbols in a particular evaluation period may be used for UL transmission (an exact evaluation period is one radio frame or more).

When IE powerBoostPi2BPSK is set to 1, for power class 3 capable UEs operating in TDD bands n40, n41, n77, n78 and n79 using Pi/2 BPSK modulation, $\triangle P_{PowerClass}$ -3dB and the UE indicates support for UE capability powerBoosting-pi2BPSK, and no more than 40% of slots in the radio frame may be used for UL transmission.

MPRc, A-MPRc and △MPRc for serving cell c are in question.

This specification proposes performance requirements (requirements) for A-MPR (additional maximum output power reduction) for terminals supporting NR-U PC3 LPI (low power indoor) to satisfy Korean regulations for the 5925MHz to 7125MHz band. In this specification, the terminal may be Power Class 3 (+23dBm).

In 3GPP, the unlicensed band 5925MHz to 7125MHz is defined as the band 'n96', and when a Power Class 3 (23dBm) terminal supporting the n96 band is launched in Korea, the terminal must satisfy the following Korean regulations. The following are the Korean regulatory parameters:

- Out-of-band emissions: -27 dBm/MHz (f ≤ 5925MHz, f ≥ 7125MHz)
- Maximum PSD for in-band emissions: +2 dBm/MHz(5925 - 7125MHz)
- Maximum EIRP = +24dBm

Band 'n96' corresponds to FR1 (Frequency Range 1: 410MHz~7125MHz), and SCS (subcarrier space) 15kHz, 30kHz, and 60kHz may be applied.

The $N_{REF}$ (NR-ARFCN (Absolute Radio Frequency Channel Number)) applicable to band 'n96' is as shown in Table 11 below.

[Table 11]

| Channel Bandwidth (total #) | Allowed NREF |
|---|---|
| 20 MHz (59) | 797000, 798332, 799668, 801000, 802332, 803668, 805000, 806332, 807668, 809000, 810332, 811668, 813000, 814332, 815668, 817000, 818332, 819668, 821000, 822332, 823668, 825000, 826332, 827668, 8290001, 8303321, 8316681, 8330001, 8343321, 8356681, 8370001, 8383321, 8396681, 8410001, 8423321, 8436681, 8450001, 8463321, 8476681, 8490001, 8503321,8516681,8530001,8543321,8556681,8570001, 8583321, 8596681, 8610001, 8623321, 8636681, 8650001, 8663321, 8676681, 8690001, 8703321, 8716681, 8730001, 8743321 |
| 40 MHz (29) | 797668, 800332, 803000, 805668, 808332, 811000, 813668, 816332, 819000, 821668, 824332, 827000, 8296681, 8323321, 8350001,8376681,8403321,8430001,8456681,8483321, 8510001, 8536681, 8563321, 8590001, 8616681, 8643321, 8670001, 8696681, 8723321 |
| 60 MHz (29) | 798332, 799668, 803668, 805000, 809000, 810332, 814332, 815668, 819668, 821000, 825000, 826332, 8303321, 8316681, 8356681,8370001,8410001,8423321,8463321,8476681, 8516681, 8530001, 8570001, 8583321, 8623321, 8636681, 8676681,8690001,8730001 |
| 80 MHz (14) | 799000, 804332, 809668, 815000, 820332, 825668, 8310001, 8363321,8416681,8470001,8523321,8576681,8630001, 8683321 |
| 100 MHz (17) | 799668, 803668, 810332, 814332, 821000, 825000, 8316681, 83560681, 8423321, 8463321, 8530001, 8570001, 8636681, 8676681, 8690001, 8703321, 8716681 |
| NOTE 1: This NR-ARFCN is not available for operation in band n96 in Europe | |

Table 12 shows the rounded center frequency corresponding to Table 11.

[Table 12]

| Channel Bandwidth (Total #) | Rounded(Fc) from Allowed NREF |
|---|---|
| 20 MHz(59) | 5955, 5975, 5995, 6015, 6035, 6055, 6075, 6095, 6115, 6135, 6155, 6175, 6195, 6215, 6235, 6255, 6275, 6295, 6315, 6335, 6355, 6375, 6395, 6415, 64351, 64541, 64751, 64951, 65151, 65351, 65551, 65751, 65951, 66151, 66351, 66551, 66751, 66951, 67151, 67351, 67551, 67751, 67951, 68151, 68351, 68551, 68751, 68951, 69151, 69351, 69551, 69751, 69951, 70151, 70351, 70551, 70751, 70951, 71151 |
| 40 MHz(29) | 5965, 6005, 6045, 6085, 6125, 6165, 6205, 6245, 6285, 6325, 6365, 6405, 64451, 64851, 65251, 65651, 66051, 66451, 66851, 67251, 67651, 68051, 68451, 68851, 69251, 69651, 70051, 70451,70851 |
| 60 MHz(29) | 5975, 5995, 6055, 6075, 6135, 6155, 6215, 6235, 6295, 6315, 6375, 6395, 64551, 64751, 65351, 65551, 66151, 66351, 66951, 67151, 67751, 67951, 68551, 68751, 69351, 69551, 70151, 70351, 70951 |
| 80 MHz(14) | 5985, 6065, 6145, 6225, 6305, 6385, 64651, 65451, 66251, 67051, 67851,68651,69451,70251 |
| 100 MHz(17) | 5995, 6055, 6155, 6215, 6315, 6375, 64751, 65351, 66351, 66951, 67951, 68551,69551, 70151, 70351, 70551, 70751 |
| NOTE 1: This NR-ARFCN is not available for operation in band n96 in Europe | |

**FIG. 10 shows examples of center frequencies available in n96.**

FIG. 10 shows center frequencies and channel bandwidths available in n96. For CBWs of 20MHz, 60MHz, and 100MHz, there may be no Guard Bandwidth (GBW) for each edge channel. For CBWs of 40MHz and 80MHz, there may be 20MHz of GBW for each edge channel.

In FIG. 10, CBW 20MHz, #1 is 5955MHz (797000), and #59 is 7115MHz (874332).

In the CBW 40MHz of FIG. 10, #1 is 5965MHz(797668), #2 is 6005MHz(800332), #28 is 7045MHz(869668), #29 is 7085MHz(872332), #Ext is 7105MHz(873667).

In the CBW 60MHz of FIG. 10, #1 is 5975MHz(798332), #2 is 5995MHz(799668), #3 is 6055MHz(803668), #27 is 7015MHz(867668), #28 is 7035MHz(869000), #29 is 7095MHz(873000).
In the CBW of 80MHz in FIG. 10, #1 is 5985MHz(799000), #2 is 6065MHz(804332), #13 is 6945MHz(863000), #14 is 7025MHz(868332) #Ext is 7085MHz(872333).
In the CBW of 1000MHz in FIG. 10, #1 is 5995MHz(799668), #2 is 6065MHz(803668), #3 is 6155MHz(810332), #16 is 7055MHz(870332) #17 is 7075MHz(871668).

- 20MHz: Edge channel = #59 (No GBW)
- 40MHz: Edge channel = #1 or #29 (GBW = 20MHz)
- 60MHz: Edge channel = #29 (No GBW)
- 80MHz: Edge channel = #1 (GBW = 20MHz)
- 100MHz: Edge channel = #17 (No GBW)

The second edge channel may be considered for simulation.
The simulated edge channels are as follows:

- 20MHz: Edge channel = #59, #1
- 40MHz: Edge channel = #1, #2
- 60MHz: Edge channel = #29, #1
- 80MHz: Edge channel = #1, #14
- 100MHz: Edge channel = #17, #1

If extended channels (upper channels) are allowed for CBW of 40MHz, 80MHz as follows,

- 40MHz channel at 7105 can be added for NS_60, Edge channel = #Ext
- 80MHz channel at 7085 can be added for NS_60, Edge channel = #Ext

For A-MPR, the channel number of #Ext may be additionally considered.
Table 13 and Table 14 are related to NR-U PC3 A-MPR.

[Table 13]

| | |
|---|---|
| PC3 MPR/A-MPR for 1Tx<br>-PC3 calibration point: 1dB MPR for QPSK DFT-s-OFDM 20MHz 100RB0 waveform at 30dB ACLR<br>-MPR is evaluated for the same SEM, EVM and IBE requirements than for PC5<br>-Focus MPR evaluation on single CC<br>-Post PA losses 4dB<br>PC3 MPR/A-MPR for 2Tx<br>-Calibration point for each PC5 PA: 1dB MPR for QPSK DFT-s-OFDM 20MHz 100RB3 waveform at 27dB ACLR and 20MHz NR-U SEM<br>-Focus MPR evaluation on single CC<br>-Post PA losses 4dB<br>-MPR Evaluation | |
| | -MPR is evaluated for the same SEM, EVM and IBE requirements than for PC5<br>-MPR is evaluated for 16dB and 10dB antenna isolation |
| A-MPR<br>-n96 NS_60<br>PC3 and existing NS values<br>-Add PC3 A-MPR to existing NS values for SP and LPI modes in all regions<br>-PC3 A-MPR is only applicable to NS values for SP and LPI modes<br>Channel allocations and placement<br>-Recommended WF | |

(continued)

| | |
|---|---|
| | -Re-use channel allocations (full and partial allocations) and channel placement from PC5 for PC3 simulations<br>-Evaluate in-band PSD/EIRP limited channels should have dedicated A-MPR for PC3 |
| Waveform<br>-CP-OFDM, DFT-s-OFDM<br>Modulation order<br>-QPSK/16QAM/64QAM/256QAM<br>Channel Bandwidth<br>-20/40/60/80/100MHz<br>Uplink configuration<br>-Full allocation, Interlaced Allocation | |

[Table 14]

| |
|---|
| New channels at band edge<br>-WF - Consider the following options:<br>-Option 1: Channel at band edge which have larger A-MPR than current edge channels shall be downlink only<br>-Option 2: Enable first 20MHz for DL only<br>-Option 3: Do not define the additional channel raster points<br>Additional channels for NS_53, 58, 59, 60<br>-WF - Further discuss<br>-whether no additional channel for NS_58 shall be introduced<br>-whether 20MHz channel at 5935MHz can be added for NS_59<br>-whether 40MHz channel at 5945MHz can be added for NS_59<br>-whether 60MHz channel at 5955MHz can be added for NS_59<br>-whether 80MHz channel at 5965MHz can be added for NS_59<br>-whether 100MHz channel at 5975MHz can be added for NS_59<br>n96 upper channel study<br>-Agreement - Study additional channels at the top of n96<br>-Study 40MHz channel at 7105MHz for NS_59 and reuse the A-MPR if possible<br>-Study 80MHz channel at 7085MHz for NS_59 and reuse the A-MPR if possible<br>UNII-7 channel study for NS_54<br>-WF - Further discuss<br>-whether introduction of 40MHz channel at 6545MHz can be studied<br>-whether introduction of 60MHz channel at 6835MHz can be studied<br>-whether introduction of 80MHz channels at 6565 and 6825MHz can be studied<br>-whether introduction of 100MHz channels at 6575 and 6815MHz can be studied |

Table 15 shows the simulation scenario. Table 16 shows the related RB set-up.

[Table 15]

| Test condition | DFT/CP | Modulation | Allocation |
|---|---|---|---|
| 1 | DFT-S-OFDM | QPSK | Full |
| 2 | CP-OFDM | QPSK | Full |
| 3 | DFT-S-OFDM | QPSK | Interlace_0 |
| 4 | CP-OFDM | QPSK | Interlace_0 |
| 5 | DFT-S-OFDM | 16QAM | Full |
| 6 | CP-OFDM | 16QAM | Full |

(continued)

| Test condition | DFT/CP | Modulation | Allocation |
|---|---|---|---|
| 7 | DFT-S-OFDM | 16QAM | Interlace_0 |
| 8 | CP-OFDM | 16QAM | Interlace_0 |
| 9 | DFT-S-OFDM | 64QAM | Full |
| 10 | CP-OFDM | 64QAM | Full |
| 11 | DFT-S-OFDM | 64QAM | Interlace_0 |
| 12 | CP-OFDM | 64QAM | Interlace_0 |
| 13 | DFT-S-OFDM | 256QAM | Full |
| 14 | CP-OFDM | 256QAM | Full |
| 15 | DFT-S-OFDM | 256QAM | Interlace_0 |
| 16 | CP-OFDM | 256QAM | Interlace_0 |

[Table 16]

| DFT/CP | BW (MHz) | Allocation | RB Set-up |
|---|---|---|---|
| DFT-S-OFDM | 20 | Full | 100RB3 |
| CP-OFDM | 20 | Full | 106RB3 |
| DFT-S-OFDM | 20 | Interlace_0 | 1RB3 every 10RBs(10x) |
| CP-OFDM | 20 | Interlace_0 | 1RB0 every10RBs(11x) |
| DFT-S-OFDM | 40 | Full | 216RB0 |
| CP-OFDM | 40 | Full | 216RB0 |
| DFT-S-OFDM | 40 | Interlace_0 | 1RB0 every 10RBs(20x) |
| CP-OFDM | 40 | Interlace_0 | 1RB0 every 10RBs(22x) |
| DFT-S-OFDM | 60 | Full | 162RB0 |
| CP-OFDM | 60 | Full | 162RB0 |
| DFT-S-OFDM | 60 | Interlace_0 | 1RB0 every5RBs(30x) |
| CP-OFDM | 60 | Interlace_0 | 1RB0 every5RBs(33x) |
| DFT-S-OFDM | 80 | Full | 216RB0 |
| CP-OFDM | 80 | Full | 217RB0 |
| DFT-S-OFDM | 80 | Interlace_0 | 1RB0 every5RBs(40x) |
| CP-OFDM | 80 | Interlace_0 | 1RB0 every5RBs(44x) |
| DFT-S-OFDM | 100 | Full | 273RB0 |
| CP-OFDM | 100 | Full | 273RB0 |
| DFT-S-OFDM | 100 | Interlace_0 | 1RB0 every5RBs(50x) |
| CP-OFDM | 100 | Interlace_0 | 1RB0 every5RBs(55x) |

NS_60 is related to Korean regulations.

Table 17 shows a summary of NS values.

[Table 17]

| Country | Mode | | |
|---|---|---|---|
| | SP | LPI | VLP |
| Region 1 | | | |
| EU/CEPT | N/A | NS_58 | TBD |
| Region 2 | | | |
| US | NS_54 | NS_53 | N/A |
| Canada | NS_54 | NS_59 | TBD |
| Brazil | N/A | NS_53 | TBD |
| Peru | N/A | NS_53 | N/A |
| Chile | N/A | NS_53 | N/A |
| Costa Rica | N/A | NS_01 | TBD |
| Colombia | N/A | NS_53 | N/A |
| Region 3 | | | |
| South Korea | N/A | NS_60 | [NS_61] |

The terminal may receive NS_60 from the network. The terminal may be configured to satisfy A-MPR based on NS_60.

According to the above simulation scenario, FIGS. 11 to 20 show the simulation results of Tx power backoff and proposed A-MPR values for the following cases considering only the available channel number.

- FIG. 11: 1Tx (23dBm) at CBW (channel bandwidth) = 20MHz
- FIG. 12: 1Tx (23dBm) at CBW = 40MHz
- FIG. 13: 1Tx (23dBm) at CBW = 60MHz
- FIG. 14: 1Tx (23dBm) at CBW = 80MHz
- FIG. 15: 1Tx (23dBm) at CBW = 100MHz
- FIG. 16: 2Tx (2x20dBm) at CBW = 20MHz
- FIG. 17: 2Tx (2x20dBm) at CBW = 40MHz
- FIG. 18: 2Tx (2x20dBm) at CBW = 60MHz
- FIG. 19: 2Tx (2x20dBm) at CBW = 80MHz
- FIG. 20: 2Tx (2x20dBm) at CBW = 100MHz

**FIG. 11 shows the Tx power backoff for 1Tx (23dBm) at CBW of 20MHz.**

**FIG. 12 shows the Tx power backoff for 1Tx (23dBm) at CBW of 40MHz.**

**FIG. 13 shows the Tx power backoff for 1Tx (23dBm) at CBW of 60MHz.**

**FIG. 14 shows the Tx power backoff for 1Tx (23dBm) at CBW of 80MHz.**

**FIG. 15 shows the Tx power backoff for 1Tx (23dBm) at CBW of 100MHz.**

**FIG. 16 shows the Tx power backoff for 2Tx (2x20dBm) at CBW of 20MHz.**

**FIG. 17 shows the Tx power backoff for 2Tx (2x20dBm) at CBW of 40MHz.**

**FIG. 18 shows the Tx power backoff for 2Tx (2x20dBm) at CBW of 60MHz.**

**FIG. 19 shows the Tx power backoff for 2Tx (2x20dBm) at CBW of 80MHz.**

**FIG. 20 shows the Tx power backoff for 2Tx (2x20dBm) at CBW of 100MHz.**

For 1Tx, it may be as follows:

- The Tx power backoff may be lower as the CBW is higher.
- The Tx power backoff for the second edge channel may be almost the same as the first edge channel except for the CP-OFDM full allocation scenario where the CBW is 60MHz.
- For CP-OFDM full allocation scenario with CBW of 60MHz, the Tx power backoff of the first edge channel may be about 0.5dB to 0.8dB higher than the second edge channel.

For 2Tx, it may be as follows:

- The Tx power backoff may be lower as the CBW is higher.
- The Tx power backoff for the second edge channel may be almost the same as the first edge channel except for CP-OFDM full allocation scenario with CBW of 60MHz.
- For CP-OFDM full allocation scenario with CBW of 60MHz, the Tx power backoff for the first edge channel may be about 1.2 higher than the second edge channel for QPSK, 16QAM, and 64QAM.
- The Tx power backoff for antenna isolation of 10dB may be almost the same as for 16dB of antenna isolation.

Based on the simulation results, the A-MPR for domestic NR-U PC3-based LPI may be proposed for 1Tx and 2Tx, as shown in Table 18 and Table 19, respectively. Here, the MPR for Pi/2 BPSK may be proposed using the same MPR as QPSK.

A-MPR may be determined based on pre-coding, channel bandwidth, modulation scheme and RB allocation scheme. The pre-coding may be pre-coding for the uplink signal of the terminal. The channel bandwidth may be the channel bandwidth for the uplink signal of the terminal. The modulation scheme may be the modulation scheme for the uplink signal of the terminal. The RB allocation scheme may be the RB allocation scheme for the uplink signal of the terminal.

Table 18 shows the A-MPR for NR-U PC3 terminal with 1Tx.

[Table 18]

| Pre-coding | Modulation | Channel bandwidth (Sub-band allocation) / RB Allocation | | | | | | | | | |
|---|---|---|---|---|---|---|---|---|---|---|---|
| | | 20 MHz | | 40 MHz | | 60 MHz | | 80 MHz | | 100 MHz | |
| | | Full (dB) | Partial (dB) | Full (dB) | Partial (dB) | Full (dB) | Partial (dB) | Full (dB) | Partial (dB) | Full (dB) | Partial (dB) |
| DFT-s-OFDM | Pi/2 BPSK | ≤9.0 | ≤11.5 | ≤6.0 | ≤9.0 | ≤4.5 | ≤7.0 | ≤3.0 | ≤6.0 | ≤2.5 | ≤5.0 |
| | QPSK | ≤9.0 | ≤11.5 | ≤6.0 | ≤9.0 | ≤4.5 | ≤7.0 | ≤3.0 | ≤6.0 | ≤2.5 | ≤5.0 |
| | 16 QAM | ≤9.0 | ≤11.5 | ≤6.0 | ≤9.0 | ≤4.5 | ≤7.0 | ≤3.0 | ≤6.0 | ≤2.5 | ≤5.0 |
| | 64 QAM | ≤9.0 | ≤11.5 | ≤6.0 | ≤9.0 | ≤4.5 | ≤7.0 | ≤3.0 | ≤6.0 | ≤2.5 | ≤5.0 |
| | 256 QAM | ≤9.0 | ≤11.5 | ≤6.0 | ≤9.0 | ≤4.5 | ≤7.0 | ≤3.0 | ≤6.0 | ≤3.0 | ≤5.0 |
| CP-OFDM | QPSK | ≤9.0 | ≤11.5 | ≤6.0 | ≤9.0 | ≤5.0 | ≤7.0 | ≤3.5 | ≤6.0 | ≤3.5 | ≤5.0 |
| | 16 QAM | ≤9.0 | ≤11.5 | ≤6.0 | ≤9.0 | ≤5.0 | ≤7.0 | ≤3.5 | ≤6.0 | ≤3.5 | ≤5.0 |
| | 64 QAM | ≤9.0 | ≤11.5 | ≤6.0 | ≤9.0 | ≤5.0 | ≤7.0 | ≤3.5 | ≤6.0 | ≤3.5 | ≤5.0 |
| | 256 QAM | ≤9.0 | ≤11.5 | ≤6.0 | ≤9.0 | ≤5.0 | ≤7.0 | ≤4.0 | ≤6.0 | ≤4.0 | ≤5.0 |
| NOTE 1: Full allocation A-MPR applies when all RB's in a 20 MHz channel or all RB's in all sub-bands for wideband operation are fully allocated and all sub-bands are transmitted. Partial allocation A-MPR applies when one or more RB's in one or more sub-bands are not allocated but when all sub-bands within the channel are transmitted. When not all sub-bands within the channel are transmitted, the A-MPR associated with the channel bandwidth according to the bandwidth of the contiguously transmitted sub-bands and according to the allocation type applies | | | | | | | | | | | |

Table 19 shows the A-MPR for NR-U PC3 terminals with 2Tx.

[Table 19]

| Pre-coding | Modulation | Channel bandwidth (Sub-band allocation) / RB Allocation | | | | | | | | | |
|---|---|---|---|---|---|---|---|---|---|---|---|
| | | 20 MHz | | 40 MHz | | 60 MHz | | 80 MHz | | 100 MHz | |
| | | Full (dB) | Partial (dB) | Full (dB) | Partial (dB) | Full (dB) | Partial (dB) | Full (dB) | Partial (dB) | Full (dB) | Partial (dB) |
| DFT-s-OFDM | Pi/2 BPSK | ≤9.0 | ≤11.5 | ≤6.0 | ≤9.0 | ≤4.5 | ≤7.0 | ≤3.0 | ≤6.0 | ≤3.0 | ≤5.5 |
| | QPSK | ≤9.0 | ≤11.5 | ≤6.0 | ≤9.0 | ≤4.5 | ≤ 7.0 | ≤3.0 | ≤6.0 | ≤3.0 | ≤5.5 |
| | 16 QAM | ≤9.0 | ≤11.5 | ≤6.0 | ≤9.0 | ≤4.5 | ≤7.0 | ≤3.0 | ≤6.0 | ≤3.0 | ≤5.5 |
| | 64 QAM | ≤9.0 | ≤11.5 | ≤6.0 | ≤9.0 | ≤4.5 | ≤7.0 | ≤3.0 | ≤6.0 | ≤3.0 | ≤5.5 |
| | 256 QAM | ≤9.0 | ≤11.5 | ≤6.0 | ≤9.0 | ≤4.5 | ≤7.0 | ≤4.0 | ≤6.0 | ≤4.0 | ≤5.5 |

(continued)

| Pre-coding | Modulation | Channel bandwidth (Sub-band allocation) / RB Allocation | | | | | | | | | |
|---|---|---|---|---|---|---|---|---|---|---|---|
| | | 20 MHz | | 40 MHz | | 60 MHz | | 80 MHz | | 100 MHz | |
| | | Full (dB) | Partial (dB) | Full (dB) | Partial (dB) | Full (dB) | Partial (dB) | Full (dB) | Partial (dB) | Full (dB) | Partial (dB) |
| CP-OFDM | QPSK | ≤9.0 | ≤11.5 | ≤6.0 | ≤9.0 | ≤5.0 | ≤7.0 | ≤4.5 | ≤6.0 | ≤4.5 | ≤5.5 |
| | 16 QAM | ≤9.0 | ≤11.5 | ≤6.0 | ≤9.0 | ≤5.0 | ≤7.0 | ≤4.5 | ≤6.0 | ≤4.5 | ≤5.5 |
| | 64 QAM | ≤9.0 | ≤11.5 | ≤6.0 | ≤9.0 | ≤5.0 | ≤7.0 | ≤4.5 | ≤6.0 | ≤4.5 | ≤5.5 |
| | 256 QAM | ≤9.0 | ≤11.5 | ≤6.0 | ≤9.0 | ≤5.0 | ≤7.0 | ≤5.5 | ≤6.0 | ≤5.5 | ≤5.5 |
| NOTE 1: Full allocation A-MPR applies when all RB's in a 20 MHz channel or all RB's in all sub-bands for wideband operation are fully allocated and all sub-bands are transmitted. Partial allocation A-MPR applies when one or more RB's in one or more sub-bands are not allocated but when all sub-bands within the channel are transmitted. When not all sub-bands within the channel are transmitted, the A-MPR associated with the channel bandwidth according to the bandwidth of the contiguously transmitted sub-bands and according to the allocation type applies | | | | | | | | | | | |

A-MPR considering additional implementation margin a may be proposed for the values in Table 18 and Table 19, where a may be ±0 to ±3.0. For example, a may be ±0, ±0.5, ±1.0, ±1.5, ±2.0, ±2.5 or ±3.0. The values in Table 18 and Table 19 may correspond to the case where a is 0.

NS_60 may be proposed to be reused for A-MPR for NR-U PC3-based LPI in Korea.

The following may be proposed:

- A-MPR may be defined for NR-U PC3 of 1Tx (23dBm) in Korea as in Table 18.
- A-MPR provided in Table 19 may be defined for NR-U PC3 of 2Tx (2x20dBm) for 10dB antenna isolation in Korea.
- A-MPR may be defined as provided in Table 19 for NR-U PC3 of 2Tx (2x20dBm) for 16dB antenna isolation in Korea.
- NS_60 may be reused for A-MPR of NR-U PC3 based LPI in Korea.

Table 20 shows the extended $N_{REF}$ (NR-ARFCN) for operation in n96 band.

Table 20 shows the corresponding NR-ARFCN for extended channels (#Ext) of 40MHz and 80MHz.

[Table 20]

| Channel Bandwidth (total #) | Allowed $N_{REF}$ |
|---|---|
| 20 MHz(59) | 797000, 798332, 799668, 801000, 802332, 803668, 805000, 806332, 807668, 809000, 810332, 811668, 813000, 814332, 815668, 817000, 818332, 819668, 821000, 822332, 823668, 825000, 826332, 827668, 829000[1], 830332[1], 831668[1], 833000[1], 834332[1], 835668[1], 837000[1], 838332[1], 839668[1], 841000[1], 842332[1], 843668[1], 845000[1], 846332[1], 847668[1], 849000[1], 850332[1], 851668[1], 853000[1], 854332[1], 855668[1], 857000[1], 858332[1], 859668[1], 861000[1], |
| | 862332[1], 863668[1], 865000[1], 866332[1], 867668[1], 869000[1], 870332[1], 871668[1], 873000[1], 874332[1] |
| 40 MHz(29) | 797668, 800332, 803000, 805668, 808332, 811000, 813668, 816332, 819000, 821668, 824332, 827000, 829668[1], 832332[1], 835000[1], 837668[1], 840332[1], 843000[1], 845668[1], 848332[1], 851000[1], 853668[1], 856332[1], 859000[1], 861668[1], 864332[1], 867000[1], 869668[1], 872332[1], 873667[1] |
| 60 MHz(29) | 798332, 799668, 803668, 805000, 809000, 810332, 814332, 815668, 819668, 821000, 825000, 826332, 830332[1], 831668[1], 835668[1], 837000[1], 841000[1], 842332[1], 846332[1], 847668[1], 851668[1], 853000[1], 857000[1], 858332[1], 862332[1], 863668[1], 867668[1], 869000[1], 873000[1] |
| 80 MHz(14) | 799000, 804332, 809668, 815000, 820332, 825668, 831000[1], 836332[1], 841668[1], 847000[1], 852332[1], 857668[1], 863000[1], 868332[1], 872333[1] |
| 100 MHz(17) | 799668, 803668, 810332, 814332, 821000, 825000, 831668[1], 835668[1], 842332[1], 846332[1], 853000[1], 857000[1], 863668[1], 867668[1], 869000[1], 870332[1], 871668[1] |
| NOTE 1: This NR-ARFCN is not available for operation in band n96 in Europe | |

Compared to Table 11, allowed $N_{REF}$ of 873667 have been added for channel bandwidths of 40 MHz and allowed $N_{REF}$ of 872333 have been added for channel bandwidths of 80 MHz.

FIGS. 21 to 24 show the simulation results of Tx power backoff and the proposed A-MPR values for the following cases including the extended channel (#Ext) for CBW of 40 MHz and 80 MHz.

- FIG. 21: 1Tx (23dBm) at CBW = 40MHz
- FIG. 22: 1Tx (23dBm) at CBW = 80MHz
- FIG. 23: 2Tx (2x20dBm) at CBW = 40MHz
- FIG. 24: 2Tx (2x20dBm) at CBW = 80MHz

**FIG. 21 shows the Tx power backoff for 1Tx (23dBm) at CBW of 40MHz.**

**FIG. 22 shows the Tx power backoff for 1Tx (23dBm) at CBW of 80MHz.**

**FIG. 23 shows the Tx power backoff for 2Tx (2x20dBm) at CBW of 40MHz.**

**FIG. 24 shows the Tx power backoff for 2Tx (2x20dBm) at CBW of 80MHz.**

The following may be observed for 1Tx and 2Tx:

- The Tx power backoff for the upper edge channel (#Ext) may be almost the same as that for the first edge channel for CBW of 40MHz.

- The Tx power backoff for the upper edge channel (#Ext) may be about 0.5dB~1.0dB higher than that for the first edge channel for CBW of 80MHz.

Based on the simulation results, if the upper channel (#Ext) is allowed for CBW of 40MHz and 80MHz, the A-MPR for the NR-U PC3-based LPI in Korea may be proposed as shown in Table 21 and Table 22 for 1Tx and 2Tx, respectively. Here, we may propose an MPR for Pi/2 BPSK using the same MPR as QPSK.

Table 21 shows the A-MPR for NR-U PC3 terminal with 1Tx.

[Table **21]**

| Pre-coding | Modulation | Channel bandwidth (Sub-band allocation) / RB Allocation | | | | | | | | | |
|---|---|---|---|---|---|---|---|---|---|---|---|
| | | 20 MHz | | 40 MHz | | 60 MHz | | 80 MHz | | 100 MHz | |
| | | Full (dB) | Partial (dB) | Full (dB) | Partial (dB) | Full (dB) | Partial (dB) | Full (dB) | Partial (dB) | Full (dB) | Partial (dB) |
| DFT-s-OFDM | Pi/2 BPSK | ≤90 | ≤11.5 | ≤6.0 | ≤ 9.0 | ≤4.5 | ≤ 7.0 | ≤3.0 | ≤ 6.0 | ≤2.5 | ≤5.0 |
| | QPSK | ≤9.0 | ≤11.5 | ≤6.0 | ≤ 9.0 | ≤4.5 | ≤ 7.0 | ≤3.0 | ≤ 6.0 | ≤2.5 | ≤5.0 |
| | 16 QAM | ≤9.0 | ≤11.5 | ≤6.0 | ≤ 9.0 | ≤4.5 | ≤ 7.0 | ≤3.0 | ≤ 6.0 | ≤2.5 | ≤5.0 |
| | 64 QAM | ≤9.0 | ≤11.5 | ≤6.0 | ≤ 9.0 | ≤4.5 | ≤ 7.0 | ≤3.0 | ≤ 6.0 | ≤2.5 | ≤5.0 |
| | 256 QAM | ≤9.0 | ≤11.5 | ≤6.0 | ≤ 9.0 | ≤4.5 | ≤ 7.0 | ≤3.0 | ≤ 6.0 | ≤3.0 | ≤5.0 |

(continued)

| | | Full (dB) | Partial (dB) | Full (dB) | Partial (dB) | Full (dB) | Partial (dB) | Full (dB) | Partial (dB) | Full (dB) | Partial (dB) |
|---|---|---|---|---|---|---|---|---|---|---|---|
| CP-OFDM | QPSK | ≤9.0 | ≤11.5 | ≤6.0 | ≤ 9.0 | ≤5.0 | ≤ 7.0 | ≤4.5 | ≤ 6.0 | ≤3.5 | ≤5.0 |
| | 16 QAM | ≤9.0 | ≤11.5 | ≤6.0 | ≤ 9.0 | ≤5.0 | ≤ 7.0 | ≤4.5 | ≤ 6.0 | ≤3.5 | ≤5.0 |
| | 64 QAM | ≤9.0 | ≤11.5 | ≤6.0 | ≤ 9.0 | ≤5.0 | ≤ 7.0 | ≤4.5 | ≤ 6.0 | ≤3.5 | ≤5.0 |
| | 256 QAM | ≤9.0 | ≤11.5 | ≤6.0 | ≤ 9.0 | ≤5.0 | ≤ 7.0 | ≤4.5 | ≤6.0 | ≤4.0 | ≤5.0 |
| NOTE 1: Full allocation A-MPR applies when all RB's in a 20 MHz channel or all RB's in all sub-bands for wideband operation are fully allocated and all sub-bands are transmitted. Partial allocation A-MPR applies when one or more RB's in one or more sub-bands are not allocated but when all sub-bands within the channel are transmitted. When not all sub-bands within the channel are transmitted, the A-MPR associated with the channel bandwidth according to the bandwidth of the contiguously transmitted sub-bands and according to the allocation type applies | | | | | | | | | | | |

Table 22 shows the A-MPR for NR-U PC3 terminals with 2Tx.

[Table 22]

| Pre-coding | Modulation | Channel bandwidth (Sub-band allocation) / RB Allocation | | | | | | | | | |
|---|---|---|---|---|---|---|---|---|---|---|---|
| | | 20 MHz | | 40 MHz | | 60 MHz | | 80 MHz | | 100 MHz | |
| | | Full (dB) | Partial (dB) | Full (dB) | Partial (dB) | Full (dB) | Partial (dB) | Full (dB) | Partial (dB) | Full (dB) | Partial (dB) |
| DFT-s-OFDM | Pi/2 BPSK | ≤9.0 | ≤11.5 | ≤6.0 | ≤9.0 | ≤4.5 | ≤7.0 | ≤3.0 | ≤6.0 | ≤3.0 | ≤5.5 |
| | QPSK | ≤9.0 | ≤11.5 | ≤6.0 | ≤9.0 | ≤4.5 | ≤7.0 | ≤3.0 | ≤6.0 | ≤3.0 | ≤5.5 |
| | 16 QAM | ≤9.0 | ≤11.5 | ≤6.0 | ≤9.0 | ≤4.5 | ≤7.0 | ≤3.5 | ≤6.0 | ≤3.0 | ≤5.5 |
| | 64 QAM | ≤9.0 | ≤11.5 | ≤6.0 | ≤9.0 | ≤4.5 | ≤7.0 | ≤3.5 | ≤6.0 | ≤3.0 | ≤5.5 |
| | 256 QAM | ≤9.0 | ≤11.5 | ≤6.0 | ≤9.0 | ≤4.5 | ≤7.0 | ≤4.0 | ≤6.0 | ≤4.0 | ≤5.5 |
| CP-OFDM | QPSK | ≤9.0 | ≤11.5 | ≤6.0 | ≤9.0 | ≤5.0 | ≤7.0 | 55.0 | ≤6.0 | ≤4.5 | ≤5.5 |
| | 16 QAM | ≤9.0 | ≤11.5 | ≤6.0 | ≤9.0 | ≤5.0 | ≤7.0 | 55.0 | ≤6.0 | ≤4.5 | ≤5.5 |
| | 64 QAM | ≤9.0 | ≤11.5 | ≤6.0 | ≤9.0 | ≤5.0 | ≤7.0 | 55.0 | ≤6.0 | ≤4.5 | ≤5.5 |
| | 256 QAM | ≤9.0 | ≤11.5 | ≤6.0 | ≤9.0 | ≤5.0 | ≤7.0 | ≤5.5 | ≤6.0 | ≤5.5 | ≤5.5 |
| NOTE 1: Full allocation A-MPR applies when all RB's in a 20 MHz channel or all RB's in all sub-bands for wideband operation are fully allocated and all sub-bands are transmitted. Partial allocation A-MPR applies when one or more RB's in one or more sub-bands are not allocated but when all sub-bands within the channel are transmitted. When not all sub-bands within the channel are transmitted, the A-MPR associated with the channel bandwidth according to the bandwidth of the contiguously transmitted sub-bands and according to the allocation type applies | | | | | | | | | | | |

Alternatively, in the case of 2Tx, compared to 1Tx A-MPR, considering the margin, it may be proposed as in Table 23.

Table 23 shows the A-MPR for NR-U PC3 terminals with 2Tx.

[Table 23]

| Pre-coding | Modulation | Channel bandwidth (Sub-band allocation) / RB Allocation | | | | |
|---|---|---|---|---|---|---|
| | | 20 MHz | 40 MHz | 60 MHz | 80 MHz | 100 MHz |

| | | Full (dB) | Partial (dB) | Full (dB) | Partial (dB) | Full (dB) | Partial (dB) | Full (dB) | Partial (dB) | Full (dB) | Partial (dB) |
|---|---|---|---|---|---|---|---|---|---|---|---|
| DFT-s-OFDM | Pi/2 BPSK | ≤9.5 | ≤11.5 | ≤6.0 | ≤9.0 | ≤4.5 | ≤7.0 | ≤3.0 | ≤6.0 | ≤3.0 | ≤5.5 |
| | QPSK | ≤9.5 | ≤11.5 | ≤6.0 | ≤9.0 | ≤4.5 | ≤7.0 | ≤3.0 | ≤6.0 | ≤3.0 | ≤5.5 |
| | 16 QAM | ≤9.5 | ≤11.5 | ≤6.0 | ≤9.0 | ≤4.5 | ≤7.0 | ≤3.0 | ≤6.0 | ≤3.0 | ≤5.5 |
| | 64 QAM | ≤9.5 | ≤11.5 | ≤6.0 | ≤9.0 | ≤4.5 | ≤7.0 | ≤3.0 | ≤6.0 | ≤3.0 | ≤5.5 |
| | 256 QAM | ≤9.5 | ≤11.5 | ≤6.0 | ≤9.0 | ≤4.5 | ≤7.0 | ≤4.5 | ≤6.0 | ≤4.5 | ≤5.5 |
| CP-OFDM | QPSK | ≤9.5 | ≤11.5 | ≤6.0 | ≤9.0 | ≤5.0 | ≤7.0 | ≤4.5 | ≤6.0 | ≤4.5 | ≤5.5 |
| | 16 QAM | ≤9.5 | ≤11.5 | ≤6.0 | ≤9.0 | ≤5.0 | ≤7.0 | ≤4.5 | ≤6.0 | ≤4.5 | ≤5.5 |
| | 64 QAM | ≤9.5 | ≤11.5 | ≤6.0 | ≤9.0 | ≤5.0 | ≤7.0 | ≤4.5 | ≤6.0 | ≤4.5 | ≤5.5 |
| | 256 QAM | ≤9.5 | ≤11.5 | ≤6.0 | ≤9.0 | ≤5.0 | ≤7.0 | ≤5.5 | ≤6.5 | ≤5.5 | ≤6.0 |
| NOTE 1: Full allocation A-MPR applies when all RB's in a 20 MHz channel or all RB's in all sub-bands for wideband operation are fully allocated and all sub-bands are transmitted. Partial allocation A-MPR applies when one or more RB's in one or more sub-bands are not allocated but when all sub-bands within the channel are transmitted. When not all sub-bands within the channel are transmitted, the A-MPR associated with the channel bandwidth according to the bandwidth of the contiguously transmitted sub-bands and according to the allocation type applies | | | | | | | | | | | |

The A-MPR considering the additional implementation margin a in the values of Table 21 to Table 23 may be proposed, where a may be ±0 to ±3.0. For example, a may be ±0, ±0.5, ±1.0, ±1.5, ±2.0, ±2.5 or ±3.0. The values of Table 21 and Table 22 may correspond to the case where a is 0. The following may be proposed:

- Define A-MPR for NR-U PC3 of 1Tx (23dBm) in Korea as in Table 21 when the upper channel is allowed for CBW of 40MHz and 80MHz.
- Define A-MPR for NR-U PC3 of 2Tx (2x20dBm) for antenna isolation 10dB in Korea as in Table 22 when the upper channel is allowed for CBW of 40MHz and 80MHz.
- Define A-MPR as given in Table 22 for NR-U PC3 of 2Tx (2x20dBm) for antenna isolation 16dB in Korea when upper channel is allowed for CBW of 40MHz and 80MHz.
- Define A-MPR as given in Table 23 for NR-U PC3 of 2Tx (2x20dBm) for antenna isolation 10dB in Korea when upper channel is allowed for CBW of 40MHz and 80MHz.
- Define A-MPR as given in Table 23 for NR-U PC3 of 2Tx (2x20dBm) for antenna isolation 16dB in Korea when upper channel is allowed for CBW of 40MHz and 80MHz.

The power back off values satisfying ACLR, SEM, SE, A-SE, in-band emission and EVM are simulated for all test scenarios at CBW 20MHz, 40MHz, 60MHz, 80MHz and 100MHz.

In general, MPR may be specified as the difference between the Tx power satisfying {ACLR (Adjacent Channel Leakage Ratio), SEM (Spectrum Emission Mask), SE (Spurious Emission), in-band emission and EVM (Error Vector Magnitude)} and the Tx power corresponding to the power class of the terminal. SEM may refer to TS38.101-1 V17.6.0, Section 6.5F.2.2, for the SEM (Spectrum Emission Mask) of the unlicensed band (NR-U). EVM for QPSK, 16QAM, 64QAM and 256QAM may be 17.5%, 12.5%, 8% and 3.5%, respectively.

MPR for 2Tx may be derived by considering the influence of Reverse IMD (inter-modulation) due to antenna isolation and FEPL (Front End Path Loss). RIMD affects EVM, so that MPR of 2Tx may be larger than that of 1Tx. For example, when antenna isolation = 10dB, FEPL = 4dB, the Reverse IMD applied from PA1 to PA2 may be as shown in Fig. 16. The Reverse IMD applied from PA2 to PA1 may also occur in the same way.

FIG. 25 shows the reverse IMD at 2Tx with **10dB** of antenna isolation.

The reverse IMD may be as follows:

- Reverse IMD = X - Antenna_Isolation - 2*FEPL (dBm)
= 23 - 10 -2*4 (dBm)

= 5 (dBm)

As an example, the additional EVM applied according to the total output power (total Tx Power) due to the reverse IMD may be assumed as shown in Table 24 below. Here, the reverse IMD may be the most important value of the 3rd order RIMD.

Table 24 shows third order RIMD induced EVM contribution vs output power and Antenna isolation.

[Table 24]

| EVM(%) | Antenna Isolation | | | |
|---|---|---|---|---|
| | 10dB | | 16dB | |
| Total Tx Power | CP-OFDM | DFT-s-OFDM | CP-OFDM | DFT-s-OFDM |
| 29.0 | 3.65 | 4.17 | 1.74 | 1.81 |
| 28.5 | 3.50 | 3.83 | 1.66 | 1.70 |
| 28.0 | 3.31 | 3.40 | 1.56 | 1.56 |
| 27.5 | 3.03 | 2.87 | 1.44 | 1.33 |
| 27.0 | 2.74 | 2.38 | 1.32 | 1.10 |
| 26.5 | 2.46 | 2.01 | 1.20 | 0.92 |
| 26.0 | 2.19 | 1.65 | 1.07 | 0.75 |
| 25.5 | 1.92 | 1.31 | 0.92 | 0.59 |
| 25.0 | 1.65 | 0.98 | 0.78 | 0.45 |
| 24.5 | 1.38 | 0.72 | 0.65 | 0.34 |
| 24.0 | 1.14 | 0.51 | 0.54 | 0.26 |
| 23.5 | 0.95 | 0.39 | 0.45 | 0.20 |
| 23.0 | 0.77 | 0.28 | 0.37 | 0.15 |
| 22.5 | 0.61 | 0.21 | 0.28 | 0.12 |
| 22.0 | 0.47 | 0.16 | 0.21 | 0.10 |
| 21.5 | 0.36 | 0.15 | 0.17 | 0.09 |
| 21.0 | 0.28 | 0.14 | 0.14 | 0.09 |
| 20.5 | 0.21 | 0.12 | 0.11 | 0.07 |

From Table 24, when the Tx power back off = 3 dB based on PC3 (23 dBm), the EVM applied to the corresponding Tx power = 20 dBm may be 0.1 to 0.2% at 10 dB of antenna isolation and 0.1% at 16 dB, which shows that the impact on the total EVM is small. This is consistent with the actual simulation results. When operating with shared spectrum channel access, the relative power of the UE emission should not exceed the largest value among the level specified in Table 26 and -30 dBm/MHz for the designated channel bandwidth. The spectrum emission mask for operating with shared spectrum channel access may be defined based on the maximum power density of the 1 MHz measurement bandwidth within the channel bandwidth.

The spectrum emission mask for operating with shared spectrum channel access may be applied to the frequency ($\Delta f_{OOB}$) starting from the +/- edge of the allocated channel bandwidth. For frequency offsets greater than $\Delta f_{OOB}$, spurious requirements may apply.

Table 25 shows the spectrum emission masks for shared spectrum channel access.

[Table 25]

| Spectrum emission limit (dBr) / Channel bandwidth | | | | | | |
|---|---|---|---|---|---|---|
| $\Delta f_{OOB}$ (MHz) | 10 MHz | 20 MHz | 40 MHz | 60 MHz | 80 MHz | Measurement bandwidth (MBW) |
| ± 0-1 | -20 \| $\Delta f_{OOB}$ \| | | | | | [100kHz][3] |
| ± 1-5 | NOTE 1 | NOTE 1 | NOTE 1 | NOTE 1 | NOTE 1 | 1 MHz |
| ± 5-10 | NOTE 2 | | | | | |
| ± 10-20 | -40 | NOTE 2 | | | | |
| ± 20-30 | | -40 | NOTE 2 | | | |
| ± 30-40 | | | | NOTE 2 | | |
| ± 40-50 | | | -40 | | NOTE 2 | |
| ± 50-60 | | | | | | |
| ± 60-70 | | | | -40 | | |
| ± 70-80 | | | | | | |
| ± 80-100 | | | | | -40 | |
| NOTE 1: Given as: -20-(8/A) \| $\Delta f_{OOB}$-1 \| where A=(Channel Bandwidth/2)-1<br>NOTE 2: Given as: -16-(12/B) \| $\Delta f_{OOB}$ \| where B=(Channel Bandwidth/2)<br>NOTE 3: The measured value shall be scaled by a factor equal to the ratio of the reference bandwidth (1 MHz) to the measurement bandwidth before the emission limit (dBr) is applied.<br>NOTE 4: The carrier leakage exceptions apply and carrier leakage contribution shall be removed prior to setting the 0dBr level of the mask, the reported carrier frequency location in txDirectCurrentLocation field of the UplinkTx-DirectCurrentBWP can be used to cancel the carrier leakage contribution. If txDirectCurrentLocation is not available or is reported with value 3300 or 3301, a carrier frequency location at the center of the channel shall be assumed. | | | | | | |

For measurement conditions at the edge of each frequency range, the lowest frequency of the measurement location in each frequency range may be set to the lowest boundary of the frequency range plus NMW/2. MBW (measurement bandwidth) may be a measurement bandwidth. The highest frequency of the measurement location in each frequency range may be set to the highest boundary of the frequency range minus MBW/2. The following drawings are created to explain specific examples of the present specification. The names of specific devices or names of specific signals/messages/fields described in the drawings are presented as examples, and therefore, the technical features of the present specification are not limited to the specific names used in the following drawings.

**FIG. 26 shows the procedure of the UE for the disclosure of this specification.**

1. The UE may transmit, to a base station, an uplink signal.

The UE may be a power class 3 UE.

The UE may be configured to satisfy A-MPR (additional maximum power reduction).

The MPR may be based on pre-coding, channel bandwidth, a modulation scheme and an RB allocation scheme.

The transceiver includes one transmitter.

The A-MPR may be equal to or less than 11.5 dB, based on i) the pre-coding being DFT-s-OFDM (Discrete Fourier transform-spread orthogonal frequency-division multiplexing), ii) the modulation scheme being Pi/2 BPSK (binary phase shift keying), QPSK (Quadrature phase shift keying), 16 QAM (Quadrature Amplitude Modulation), 64 QAM or 256 QAM, iii) the channel bandwidth being 20 MHz and iv) the RB allocation scheme being Partial RB allocation.

The A-MPR may be equal to or less than 11.5 dB, based on i) the pre-coding being CP (Cyclic Prefix)-OFDM, ii) the modulation scheme being QPSK, 16 QAM, 64 QAM or 256 QAM, iii) the channel bandwidth being 20 MHz and iv) the RB allocation scheme being Partial RB allocation.

The transceiver includes one transmitter.

The A-MPR may be equal to or less than 6.0 dB, based on i) the pre-coding being DFT-s-OFDM, ii) the modulation scheme being Pi/2 BPSK, QPSK, 16 QAM, 64 QAM or 256 QAM, iii) the channel bandwidth being 40 MHz and iv) the RB allocation scheme being Full RB allocation.

The A-MPR may be equal to or less than 6.0 dB, based on i) the pre-coding being CP-OFDM, ii) the modulation scheme being QPSK, 16 QAM, 64 QAM or 256 QAM, iii) the channel bandwidth being 40 MHz and iv) the RB allocation scheme being Full RB allocation.

The A-MPR may be equal to or less than 9.0 dB, based on i) the pre-coding being DFT-s-OFDM, ii) the modulation scheme being Pi/2 BPSK, QPSK, 16 QAM, 64 QAM or 256 QAM, iii) the channel bandwidth being 40 MHz and iv) the RB allocation scheme being Partial RB allocation.

The A-MPR may be equal to or less than 9.0 dB, based on i) the pre-coding being CP-OFDM, ii) the modulation scheme being QPSK, 16 QAM, 64 QAM or 256 QAM, iii) the channel bandwidth being 40 MHz and iv) the RB allocation scheme being Partial RB allocation.

The transceiver includes one transmitter.

The A-MPR may be equal to or less than 4.5 dB, based on i) the pre-coding being DFT-s-OFDM, ii) the modulation scheme being Pi/2 BPSK, QPSK, 16 QAM, 64 QAM or 256 QAM, iii) the channel bandwidth being 60 MHz and iv) the RB allocation scheme being Full RB allocation.

The A-MPR may be equal to or less than 7.0 dB, based on i) the pre-coding being DFT-s-OFDM, ii) the modulation scheme being Pi/2 BPSK, QPSK, 16 QAM, 64 QAM or 256 QAM, iii) the channel bandwidth being 60 MHz and iv) the RB allocation scheme being Partial RB allocation.

The A-MPR may be equal to or less than 7.0 dB, based on i) the pre-coding being CP-OFDM, ii) the modulation scheme being QPSK, 16 QAM, 64 QAM or 256 QAM, iii) the channel bandwidth being 60 MHz and iv) the RB allocation scheme being Partial RB allocation.

The transceiver includes one transmitter.

The A-MPR may be equal to or less than 3.0 dB, based on i) the pre-coding being DFT-s-OFDM, ii) the modulation scheme being Pi/2 BPSK, QPSK, 16 QAM or 64 QAM, iii) the channel bandwidth being 80 MHz and iv) the RB allocation scheme being Full RB allocation.

The A-MPR may be equal to or less than 6.0 dB, based on i) the pre-coding being DFT-s-OFDM, ii) the modulation scheme being Pi/2 BPSK, QPSK, 16 QAM, 64 QAM or 256 QAM, iii) the channel bandwidth being 80 MHz and iv) the RB allocation scheme being Partial RB allocation.

The A-MPR may be equal to or less than 6.0 dB, based on i) the pre-coding being CP-OFDM, ii) the modulation scheme being QPSK, 16 QAM or 64 QAM, iii) the channel bandwidth being 80 MHz and iv) the RB allocation scheme being Partial RB allocation.

The transceiver includes one transmitter.

The A-MPR may be equal to or less than 2.5 dB, based on i) the pre-coding being DFT-s-OFDM, ii) the modulation scheme being Pi/2 BPSK, QPSK, 16 QAM or 64 QAM, iii) the channel bandwidth being 100 MHz and iv) the RB allocation scheme being Full RB allocation.

The A-MPR may be equal to or less than 3.5 dB, based on i) the pre-coding being CP-OFDM, ii) the modulation scheme being QPSK, or 16 QAM, iii) the channel bandwidth being 100 MHz and iv) the RB allocation scheme being Full RB allocation.

The A-MPR may be equal to or less than 5.0 dB, based on i) the pre-coding being DFT-s-OFDM, ii) the modulation scheme being Pi/2 BPSK, QPSK or 16 QAM, iii) the channel bandwidth being 100 MHz and iv) the RB allocation scheme being Partial RB allocation.

The A-MPR may be equal to or less than 5.0 dB, based on i) the pre-coding being CP-OFDM, ii) the modulation scheme being QPSK, 16 QAM or 64 QAM, iii) the channel bandwidth being 100 MHz and iv) the RB allocation scheme being Partial RB allocation.

The transceiver includes two transmitters.

The A-MPR may be equal to or less than 11.5 dB, based on i) the pre-coding being DFT-s-OFDM, ii) the modulation scheme being Pi/2 BPSK, QPSK, 16 QAM, 64 QAM or 256 QAM, iii) the channel bandwidth being 20 MHz and iv) the RB allocation scheme being Partial RB allocation.

The A-MPR may be equal to or less than 11.5 dB, based on i) the pre-coding being CP-OFDM, ii) the modulation scheme being QPSK, 16 QAM, 64 QAM or 256 QAM, iii) the channel bandwidth being 20 MHz and iv) the RB allocation scheme being Partial RB allocation.

The transceiver includes two transmitters.

The A-MPR may be equal to or less than 6.0 dB, based on i) the pre-coding being DFT-s-OFDM, ii) the modulation scheme being Pi/2 BPSK, QPSK, 16 QAM, 64 QAM or 256 QAM, iii) the channel bandwidth being 40 MHz and iv) the RB allocation scheme being Full RB allocation.

The A-MPR may be equal to or less than 6.0 dB, based on i) the pre-coding being CP-OFDM, ii) the modulation scheme being QPSK, 16 QAM, 64 QAM or 256 QAM, iii) the channel bandwidth being 40 MHz and iv) the RB allocation scheme being Full RB allocation.

The A-MPR may be equal to or less than 9.0 dB, based on i) the pre-coding being DFT-s-OFDM, ii) the modulation scheme being Pi/2 BPSK, QPSK, 16 QAM, 64 QAM or 256 QAM, iii) the channel bandwidth being 40 MHz and iv) the RB allocation scheme being Partial RB allocation.

The A-MPR may be equal to or less than 9.0 dB, based on i) the pre-coding being CP-OFDM, ii) the modulation scheme being QPSK, 16 QAM, 64 QAM or 256 QAM, iii) the channel bandwidth being 40 MHz and iv) the RB allocation scheme being Partial RB allocation.

The transceiver includes two transmitters.

The A-MPR may be equal to or less than 4.5 dB, based on i) the pre-coding being DFT-s-OFDM, ii) the modulation scheme being Pi/2 BPSK, QPSK, 16 QAM, 64 QAM or 256 QAM, iii) the channel bandwidth being 60 MHz and iv) the RB allocation scheme being Full RB allocation.

The A-MPR may be equal to or less than 5.0 dB, based on i) the pre-coding being CP-OFDM, ii) the modulation scheme being QPSK, 16 QAM, 64 QAM or 256 QAM, iii) the channel bandwidth being 60 MHz and iv) the RB allocation scheme being Full RB allocation.

The A-MPR may be equal to or less than 7.0 dB, based on i) the pre-coding being DFT-s-OFDM, ii) the modulation scheme being Pi/2 BPSK, QPSK, 16 QAM, 64 QAM or 256 QAM, iii) the channel bandwidth being 60 MHz and iv) the RB allocation scheme being Partial RB allocation.

The A-MPR may be equal to or less than 7.0 dB, based on i) the pre-coding being CP-OFDM, ii) the modulation scheme being QPSK, 16 QAM, 64 QAM or 256 QAM, iii) the channel bandwidth being 60 MHz and iv) the RB allocation scheme being Partial RB allocation.

The transceiver includes two transmitters.

The A-MPR may be equal to or less than 3.0 dB, based on i) the pre-coding being DFT-s-OFDM, ii) the modulation scheme being Pi/2 BPSK, QPSK, 16 QAM or 64 QAM, iii) the channel bandwidth being 80 MHz and iv) the RB allocation scheme being Full RB allocation.

The A-MPR may be equal to or less than 4.5 dB, based on i) the pre-coding being CP-OFDM, ii) the modulation scheme being QPSK, 16 QAM or 64 QAM, iii) the channel bandwidth being 80 MHz and iv) the RB allocation scheme being Full RB allocation.

The A-MPR may be equal to or less than 5.5 dB, based on i) the pre-coding being CP-OFDM, ii) the modulation scheme being 256 QAM, iii) the channel bandwidth being 80 MHz and iv) the RB allocation scheme being Full RB allocation.

The A-MPR may be equal to or less than 6.0 dB, based on i) the pre-coding being DFT-s-OFDM, ii) the modulation scheme being Pi/2 BPSK, QPSK, 16 QAM, 64 QAM or 256 QAM, iii) the channel bandwidth being 80 MHz and iv) the RB allocation scheme being Partial RB allocation.

The A-MPR may be equal to or less than 6.0 dB, based on i) the pre-coding being CP-OFDM, ii) the modulation scheme being QPSK, 16 QAM or 64 QAM, iii) the channel bandwidth being 80 MHz and iv) the RB allocation scheme being Partial RB allocation.

The transceiver includes two transmitters.

The A-MPR may be equal to or less than 3.0 dB, based on i) the pre-coding being DFT-s-OFDM, ii) the modulation scheme being Pi/2 BPSK, QPSK, 16 QAM or 64 QAM, iii) the channel bandwidth being 100 MHz and iv) the RB allocation scheme being Full RB allocation.

The A-MPR may be equal to or less than 4.5 dB, based on i) the pre-coding being CP-OFDM, ii) the modulation scheme being QPSK, 16 QAM or 64 QAM, iii) the channel bandwidth being 100 MHz and iv) the RB allocation scheme being Full RB allocation.

The A-MPR may be equal to or less than 5.5 dB, based on i) the pre-coding being CP-OFDM, ii) the modulation scheme being 256 QAM, iii) the channel bandwidth being 100 MHz and iv) the RB allocation scheme being Full RB allocation.

The A-MPR may be equal to or less than 5.5 dB, based on i) the pre-coding being DFT-s-OFDM, ii) the modulation scheme being Pi/2 BPSK, QPSK, 16 QAM, 64 QAM or 256 QAM, iii) the channel bandwidth being 100 MHz and iv) the RB allocation scheme being Partial RB allocation.

The A-MPR may be equal to or less than 5.5 dB, based on i) the pre-coding being CP-OFDM, ii) the modulation scheme being QPSK, 16 QAM or 64 QAM, iii) the channel bandwidth being 100 MHz and iv) the RB allocation scheme being Partial RB allocation.

The transceiver includes two transmitters.

The A-MPR may be equal to or less than 9.5 dB, based on i) the pre-coding being DFT-s-OFDM, ii) the modulation scheme being Pi/2 BPSK, QPSK, 16 QAM, 64 QAM or 256 QAM, iii) the channel bandwidth being 20 MHz and iv) the RB allocation scheme being Full RB allocation.

The A-MPR may be equal to or less than 9.5 dB, based on i) the pre-coding being CP-OFDM, ii) the modulation scheme being QPSK, 16 QAM, 64 QAM or 256 QAM, iii) the channel bandwidth being 20 MHz and iv) the RB allocation scheme being Full RB allocation.

The A-MPR may be equal to or less than 4.5 dB, based on i) the pre-coding being DFT-s-OFDM, ii) the modulation scheme being 256 QAM, iii) the channel bandwidth being 80 MHz and iv) the RB allocation scheme being Full RB allocation.

The A-MPR may be equal to or less than 6.5 dB, based on i) the pre-coding being CP-OFDM, ii) the modulation scheme being 256 QAM, iii) the channel bandwidth being 80 MHz and iv) the RB allocation scheme being Partial RB allocation.

The A-MPR may be equal to or less than 4.5 dB, based on i) the pre-coding being DFT-s-OFDM, ii) the modulation scheme being 256 QAM, iii) the channel bandwidth being 100 MHz and iv) the RB allocation scheme being Full RB allocation.

The A-MPR may be equal to or less than 6.0 dB, based on i) the pre-coding being CP-OFDM, ii) the modulation scheme being 256 QAM, iii) the channel bandwidth being 100 MHz and iv) the RB allocation scheme being Partial RB allocation.

The UE may receive, from a base station, NS_60 (Network Signal_60).

The A-MPR may be based on the NS_60.

The uplink signal may be transmitted via shared spectrum access.

**FIG. 27 shows the procedure of the base station for the disclosure of this specification.**

1. The base station may transmit, to a UE, NS_60.
2. The base station may receive, from the UE, an uplink signal.

The UE may be a power class 3 UE,

The UE may be configured to satisfy A-MPR (additional maximum power reduction),

The MPR may be based on pre-coding, channel bandwidth, a modulation scheme and an RB allocation scheme.

Hereinafter, a processor for providing communication according to some embodiments of the present specification will be described.

The processor is configured to: transmitting, to a UE, NS_60, receiving, from the UE, an uplink signal, wherein the UE is a power class 3 UE, wherein the UE is configured to satisfy A-MPR (additional maximum power reduction), wherein the MPR is based on pre-coding, channel bandwidth, a modulation scheme and an RB allocation scheme.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause to: transmitting, to a UE, NS_60; receiving, from the UE, an uplink signal, wherein the UE is a power class 3 UE, wherein the UE is configured to satisfy A-MPR (additional maximum power reduction), wherein the MPR is based on pre-coding, channel bandwidth, a modulation scheme and an RB allocation scheme.

The present specification may have various effects.

For example, through the device disclosed in this specification, a signal can be transmitted by determining the transmission power by applying the proposed A-MPR.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

**1.** A UE (User Equipment), comprising:

a transceiver for transmitting and receiving signals; and
a processor for controlling the transceiver,
wherein the processor performs operation comprising:

wherein the UE is a power class 3 UE,
wherein the UE is configured to satisfy A-MPR (additional maximum power reduction),
transmitting, to a base station, an uplink signal,
wherein the MPR is based on pre-coding, channel bandwidth, a modulation scheme and an RB allocation scheme.

**2.** The UE of claim 1,

wherein the transceiver includes one transmitter,
wherein the A-MPR is equal to or less than 11.5 dB, based on i) the pre-coding being DFT-s-OFDM (Discrete Fourier transform-spread orthogonal frequency-division multiplexing), ii) the modulation scheme being Pi/2 BPSK (binary phase shift keying), QPSK (Quadrature phase shift keying), 16 QAM (Quadrature Amplitude Modulation), 64 QAM or 256 QAM, iii) the channel bandwidth being 20 MHz and iv) the RB allocation scheme being Partial RB allocation,
wherein the A-MPR is equal to or less than 11.5 dB, based on i) the pre-coding being CP (Cyclic Prefix)-OFDM, ii) the modulation scheme being QPSK, 16 QAM, 64 QAM or 256 QAM, iii) the channel bandwidth being 20 MHz and iv) the RB allocation scheme being Partial RB allocation.

**3.** The UE of claim 1,

wherein the transceiver includes one transmitter,
wherein the A-MPR is equal to or less than 6.0 dB, based on i) the pre-coding being DFT-s-OFDM, ii) the modulation scheme being Pi/2 BPSK, QPSK, 16 QAM, 64 QAM or 256 QAM, iii) the channel bandwidth being 40 MHz and iv) the RB allocation scheme being Full RB allocation,
wherein the A-MPR is equal to or less than 6.0 dB, based on i) the pre-coding being CP-OFDM, ii) the modulation scheme being QPSK, 16 QAM, 64 QAM or 256 QAM, iii) the channel bandwidth being 40 MHz and iv) the RB allocation scheme being Full RB allocation,
wherein the A-MPR is equal to or less than 9.0 dB, based on i) the pre-coding being DFT-s-OFDM, ii) the modulation scheme being Pi/2 BPSK, QPSK, 16 QAM, 64 QAM or 256 QAM, iii) the channel bandwidth being 40 MHz and iv) the RB allocation scheme being Partial RB allocation,
wherein the A-MPR is equal to or less than 9.0 dB, based on i) the pre-coding being CP-OFDM, ii) the modulation scheme being QPSK, 16 QAM, 64 QAM or 256 QAM, iii) the channel bandwidth being 40 MHz and iv) the RB allocation scheme being Partial RB allocation.

**4.** The UE of claim 1,

wherein the transceiver includes one transmitter,
wherein the A-MPR is equal to or less than 4.5 dB, based on i) the pre-coding being DFT-s-OFDM, ii) the modulation scheme being Pi/2 BPSK, QPSK, 16 QAM, 64 QAM or 256 QAM, iii) the channel bandwidth being 60 MHz and iv) the RB allocation scheme being Full RB allocation,
wherein the A-MPR is equal to or less than 7.0 dB, based on i) the pre-coding being DFT-s-OFDM, ii) the modulation scheme being Pi/2 BPSK, QPSK, 16 QAM, 64 QAM or 256 QAM, iii) the channel bandwidth being 60 MHz and iv) the RB allocation scheme being Partial RB allocation,
wherein the A-MPR is equal to or less than 7.0 dB, based on i) the pre-coding being CP-OFDM, ii) the modulation scheme being QPSK, 16 QAM, 64 QAM or 256 QAM, iii) the channel bandwidth being 60 MHz and iv) the RB allocation scheme being Partial RB allocation.

**5.** The UE of claim 1,

wherein the transceiver includes one transmitter,
wherein the A-MPR is equal to or less than 3.0 dB, based on i) the pre-coding being DFT-s-OFDM, ii) the modulation scheme being Pi/2 BPSK, QPSK, 16 QAM or 64 QAM, iii) the channel bandwidth being 80 MHz and iv) the RB allocation scheme being Full RB allocation,
wherein the A-MPR is equal to or less than 6.0 dB, based on i) the pre-coding being DFT-s-OFDM, ii) the modulation scheme being Pi/2 BPSK, QPSK, 16 QAM, 64 QAM or 256 QAM, iii) the channel bandwidth being 80 MHz and iv) the RB allocation scheme being Partial RB allocation,
wherein the A-MPR is equal to or less than 6.0 dB, based on i) the pre-coding being CP-OFDM, ii) the modulation scheme being QPSK, 16 QAM or 64 QAM, iii) the channel bandwidth being 80 MHz and iv) the RB allocation scheme being Partial RB allocation.

**6.** The UE of claim 1,

wherein the transceiver includes one transmitter,
wherein the A-MPR is equal to or less than 2.5 dB, based on i) the pre-coding being DFT-s-OFDM, ii) the modulation scheme being Pi/2 BPSK, QPSK, 16 QAM or 64 QAM, iii) the channel bandwidth being 100 MHz and iv) the RB allocation scheme being Full RB allocation,
wherein the A-MPR is equal to or less than 3.5 dB, based on i) the pre-coding being CP-OFDM, ii) the modulation scheme being QPSK, or 16 QAM, iii) the channel bandwidth being 100 MHz and iv) the RB allocation scheme being Full RB allocation,
wherein the A-MPR is equal to or less than 5.0 dB, based on i) the pre-coding being DFT-s-OFDM, ii) the modulation scheme being Pi/2 BPSK, QPSK or 16 QAM, iii) the channel bandwidth being 100 MHz and iv) the RB allocation scheme being Partial RB allocation,
wherein the A-MPR is equal to or less than 5.0 dB, based on i) the pre-coding being CP-OFDM, ii) the modulation scheme being QPSK, 16 QAM or 64 QAM, iii) the channel bandwidth being 100 MHz and iv) the RB allocation scheme being Partial RB allocation.

**7.** The UE of claim 1,

wherein the transceiver includes two transmitters,
wherein the A-MPR is equal to or less than 11.5 dB, based on i) the pre-coding being DFT-s-OFDM, ii) the modulation scheme being Pi/2 BPSK, QPSK, 16 QAM, 64 QAM or 256 QAM, iii) the channel bandwidth being 20 MHz and iv) the RB allocation scheme being Partial RB allocation,
wherein the A-MPR is equal to or less than 11.5 dB, based on i) the pre-coding being CP-OFDM, ii) the modulation scheme being QPSK, 16 QAM, 64 QAM or 256 QAM, iii) the channel bandwidth being 20 MHz and iv) the RB allocation scheme being Partial RB allocation.

**8.** The UE of claim 1, wherein the transceiver includes two transmitters,

wherein the A-MPR is equal to or less than 6.0 dB, based on i) the pre-coding being DFT-s-OFDM, ii) the modulation scheme being Pi/2 BPSK, QPSK, 16 QAM, 64 QAM or 256 QAM, iii) the channel bandwidth being 40 MHz and iv) the RB allocation scheme being Full RB allocation,
wherein the A-MPR is equal to or less than 6.0 dB, based on i) the pre-coding being CP-OFDM, ii) the modulation scheme being QPSK, 16 QAM, 64 QAM or 256 QAM, iii) the channel bandwidth being 40 MHz and iv) the RB allocation scheme being Full RB allocation,
wherein the A-MPR is equal to or less than 9.0 dB, based on i) the pre-coding being DFT-s-OFDM, ii) the modulation scheme being Pi/2 BPSK, QPSK, 16 QAM, 64 QAM or 256 QAM, iii) the channel bandwidth being 40 MHz and iv) the RB allocation scheme being Partial RB allocation,

wherein the A-MPR is equal to or less than 9.0 dB, based on i) the pre-coding being CP-OFDM, ii) the modulation scheme being QPSK, 16 QAM, 64 QAM or 256 QAM, iii) the channel bandwidth being 40 MHz and iv) the RB allocation scheme being Partial RB allocation.

**9.** The UE of claim 1,

wherein the transceiver includes two transmitters,
wherein the A-MPR is equal to or less than 4.5 dB, based on i) the pre-coding being DFT-s-OFDM, ii) the modulation scheme being Pi/2 BPSK, QPSK, 16 QAM, 64 QAM or 256 QAM, iii) the channel bandwidth being 60 MHz and iv) the RB allocation scheme being Full RB allocation,
wherein the A-MPR is equal to or less than 5.0 dB, based on i) the pre-coding being CP-OFDM, ii) the modulation scheme being QPSK, 16 QAM, 64 QAM or 256 QAM, iii) the channel bandwidth being 60 MHz and iv) the RB allocation scheme being Full RB allocation,
wherein the A-MPR is equal to or less than 7.0 dB, based on i) the pre-coding being DFT-s-OFDM, ii) the modulation scheme being Pi/2 BPSK, QPSK, 16 QAM, 64 QAM or 256 QAM, iii) the channel bandwidth being 60 MHz and iv) the RB allocation scheme being Partial RB allocation,
wherein the A-MPR is equal to or less than 7.0 dB, based on i) the pre-coding being CP-OFDM, ii) the modulation scheme being QPSK, 16 QAM, 64 QAM or 256 QAM, iii) the channel bandwidth being 60 MHz and iv) the RB allocation scheme being Partial RB allocation.

**10.** The UE of claim 1,

wherein the transceiver includes two transmitters,
wherein the A-MPR is equal to or less than 3.0 dB, based on i) the pre-coding being DFT-s-OFDM, ii) the modulation scheme being Pi/2 BPSK, QPSK, 16 QAM or 64 QAM, iii) the channel bandwidth being 80 MHz and iv) the RB allocation scheme being Full RB allocation,
wherein the A-MPR is equal to or less than 4.5 dB, based on i) the pre-coding being CP-OFDM, ii) the modulation scheme being QPSK, 16 QAM or 64 QAM, iii) the channel bandwidth being 80 MHz and iv) the RB allocation scheme being Full RB allocation,
wherein the A-MPR is equal to or less than 5.5 dB, based on i) the pre-coding being CP-OFDM, ii) the modulation scheme being 256 QAM, iii) the channel bandwidth being 80 MHz and iv) the RB allocation scheme being Full RB allocation,
wherein the A-MPR is equal to or less than 6.0 dB, based on i) the pre-coding being DFT-s-OFDM, ii) the modulation scheme being Pi/2 BPSK, QPSK, 16 QAM, 64 QAM or 256 QAM, iii) the channel bandwidth being 80 MHz and iv) the RB allocation scheme being Partial RB allocation,
wherein the A-MPR is equal to or less than 6.0 dB, based on i) the pre-coding being CP-OFDM, ii) the modulation scheme being QPSK, 16 QAM or 64 QAM, iii) the channel bandwidth being 80 MHz and iv) the RB allocation scheme being Partial RB allocation.

**11.** The UE of claim 1,

wherein the transceiver includes two transmitters,
wherein the A-MPR is equal to or less than 3.0 dB, based on i) the pre-coding being DFT-s-OFDM, ii) the modulation scheme being Pi/2 BPSK, QPSK, 16 QAM or 64 QAM, iii) the channel bandwidth being 100 MHz and iv) the RB allocation scheme being Full RB allocation,
wherein the A-MPR is equal to or less than 4.5 dB, based on i) the pre-coding being CP-OFDM, ii) the modulation scheme being QPSK, 16 QAM or 64 QAM, iii) the channel bandwidth being 100 MHz and iv) the RB allocation scheme being Full RB allocation,
wherein the A-MPR is equal to or less than 5.5 dB, based on i) the pre-coding being CP-OFDM, ii) the modulation scheme being 256 QAM, iii) the channel bandwidth being 100 MHz and iv) the RB allocation scheme being Full RB allocation,
wherein the A-MPR is equal to or less than 5.5 dB, based on i) the pre-coding being DFT-s-OFDM, ii) the modulation scheme being Pi/2 BPSK, QPSK, 16 QAM, 64 QAM or 256 QAM, iii) the channel bandwidth being 100 MHz and iv) the RB allocation scheme being Partial RB allocation,
wherein the A-MPR is equal to or less than 5.5 dB, based on i) the pre-coding being CP-OFDM, ii) the modulation scheme being QPSK, 16 QAM or 64 QAM, iii) the channel bandwidth being 100 MHz and iv) the RB allocation scheme being Partial RB allocation.

**12.** The UE of claim 1,

wherein the transceiver includes two transmitters,
wherein the A-MPR is equal to or less than 9.5 dB, based on i) the pre-coding being DFT-s-OFDM, ii) the modulation scheme being Pi/2 BPSK, QPSK, 16 QAM, 64 QAM or 256 QAM, iii) the channel bandwidth being 20 MHz and iv) the RB allocation scheme being Full RB allocation,
wherein the A-MPR is equal to or less than 9.5 dB, based on i) the pre-coding being CP-OFDM, ii) the modulation scheme being QPSK, 16 QAM, 64 QAM or 256 QAM, iii) the channel bandwidth being 20 MHz and iv) the RB allocation scheme being Full RB allocation,
wherein the A-MPR is equal to or less than 4.5 dB, based on i) the pre-coding being DFT-s-OFDM, ii) the modulation scheme being 256 QAM, iii) the channel bandwidth being 80 MHz and iv) the RB allocation scheme being Full RB allocation,
wherein the A-MPR is equal to or less than 6.5 dB, based on i) the pre-coding being CP-OFDM, ii) the modulation scheme being 256 QAM, iii) the channel bandwidth being 80 MHz and iv) the RB allocation scheme being Partial RB allocation,
wherein the A-MPR is equal to or less than 4.5 dB, based on i) the pre-coding being DFT-s-OFDM, ii) the modulation scheme being 256 QAM, iii) the channel bandwidth being 100 MHz and iv) the RB allocation scheme being Full RB allocation,
wherein the A-MPR is equal to or less than 6.0 dB, based on i) the pre-coding being CP-OFDM, ii) the modulation scheme being 256 QAM, iii) the channel bandwidth being 100 MHz and iv) the RB allocation scheme being Partial RB allocation.

**13.** The UE of claim 1, wherein the operation further comprises:

receiving, from a base station, NS_60 (Network Signal_60),
wherein the A-MPR is based on the NS_60.

**14.** The UE of claim 1,
wherein the uplink signal is transmitted via shared spectrum access.

**15.** A method for performing communication, performed by a UE (User Equipment), comprising:

transmitting, to a base station, an uplink signal,
wherein the UE is a power class 3 UE,
wherein the UE is configured to satisfy A-MPR (additional maximum power reduction),
wherein the MPR is based on pre-coding, channel bandwidth, a modulation scheme and an RB allocation scheme.

**16.** A method for performing communication, performed by a base station, comprising:

transmitting, to a UE, NS_60;
receiving, from the UE, an uplink signal,
wherein the UE is a power class 3 UE,
wherein the UE is configured to satisfy A-MPR (additional maximum power reduction),
wherein the MPR is based on pre-coding, channel bandwidth, a modulation scheme and an RB allocation scheme.

**17.** A base station, comprising:

a transceiver for transmitting and receiving signals; and
a processor for controlling the transceiver,
wherein the processor performs operation comprising:

transmitting, to a UE, NS_60;
receiving, from the UE, an uplink signal,
wherein the UE is a power class 3 UE,
wherein the UE is configured to satisfy A-MPR (additional maximum power reduction),
wherein the MPR is based on pre-coding, channel bandwidth, a modulation scheme and an RB allocation scheme.

**18.** An apparatus in mobile communication, comprising:

at least one processor; and
at least one memory storing instructions and operably electrically connectable with the at least one processor, wherein, based on the instructions being operated by the at least one processor, the instructions perform operation comprising:

transmitting, to a base station, an uplink signal,
wherein the apparatus is a power class 3 UE,
wherein the apparatus is configured to satisfy A-MPR (additional maximum power reduction),
wherein the MPR is based on pre-coding, channel bandwidth, a modulation scheme and an RB allocation scheme.

**19.** A non-volatile computer readable storage medium having recorded instructions,
wherein the instructions, based on being executed by one or more processors, cause the one or more processors to perform operation comprising:

transmitting, to a base station, an uplink signal,
wherein a UE comprising the non-volatile computer readable storage medium is a power class 3 UE,
wherein the UE is configured to satisfy A-MPR (additional maximum power reduction),
wherein the MPR is based on pre-coding, channel bandwidth, a modulation scheme and an RB allocation scheme.

FIG. 1

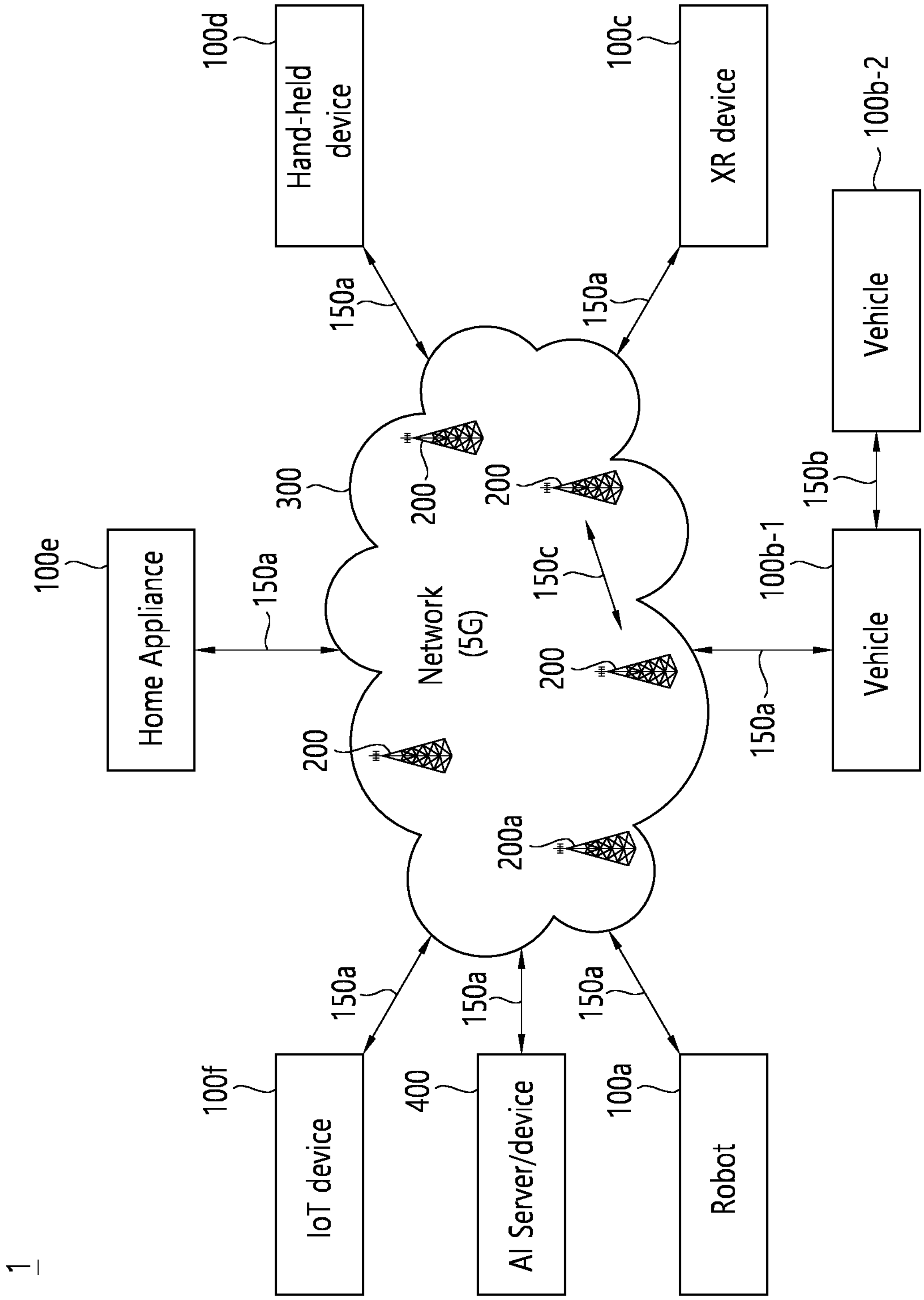
1
Hand-held device
100d
XR device
100c
Vehicle
100b-2
Home Appliance
100e
Network (5G)
300
200
200a
150a
150b
150c
Vehicle
100b-1
IoT device
100f
AI Server/device
400
Robot
100a

FIG. 2

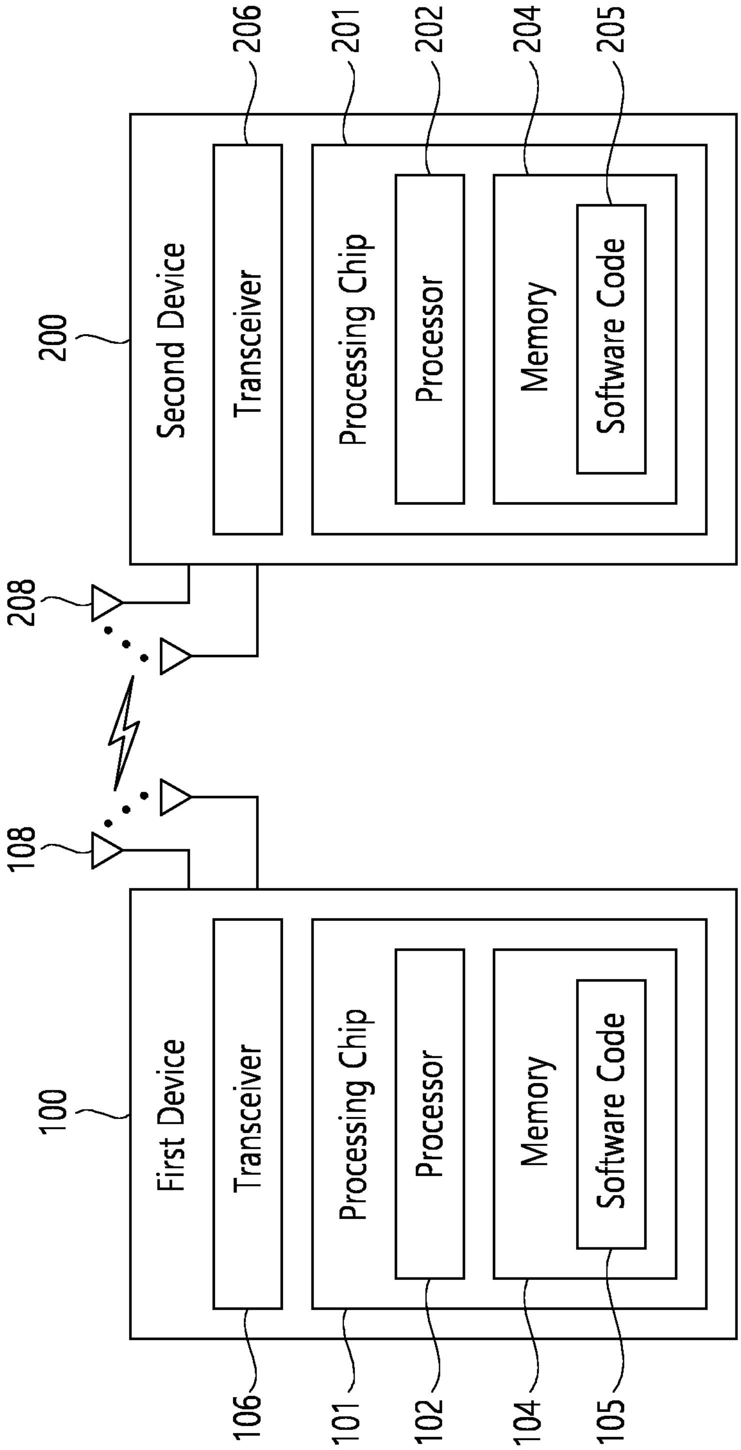
100
First Device
Transceiver
Processing Chip
Processor
Memory
Software Code
106
101
102
104
105
108
200
Second Device
Transceiver
Processing Chip
Processor
Memory
Software Code
206
201
202
204
205
208

FIG. 3

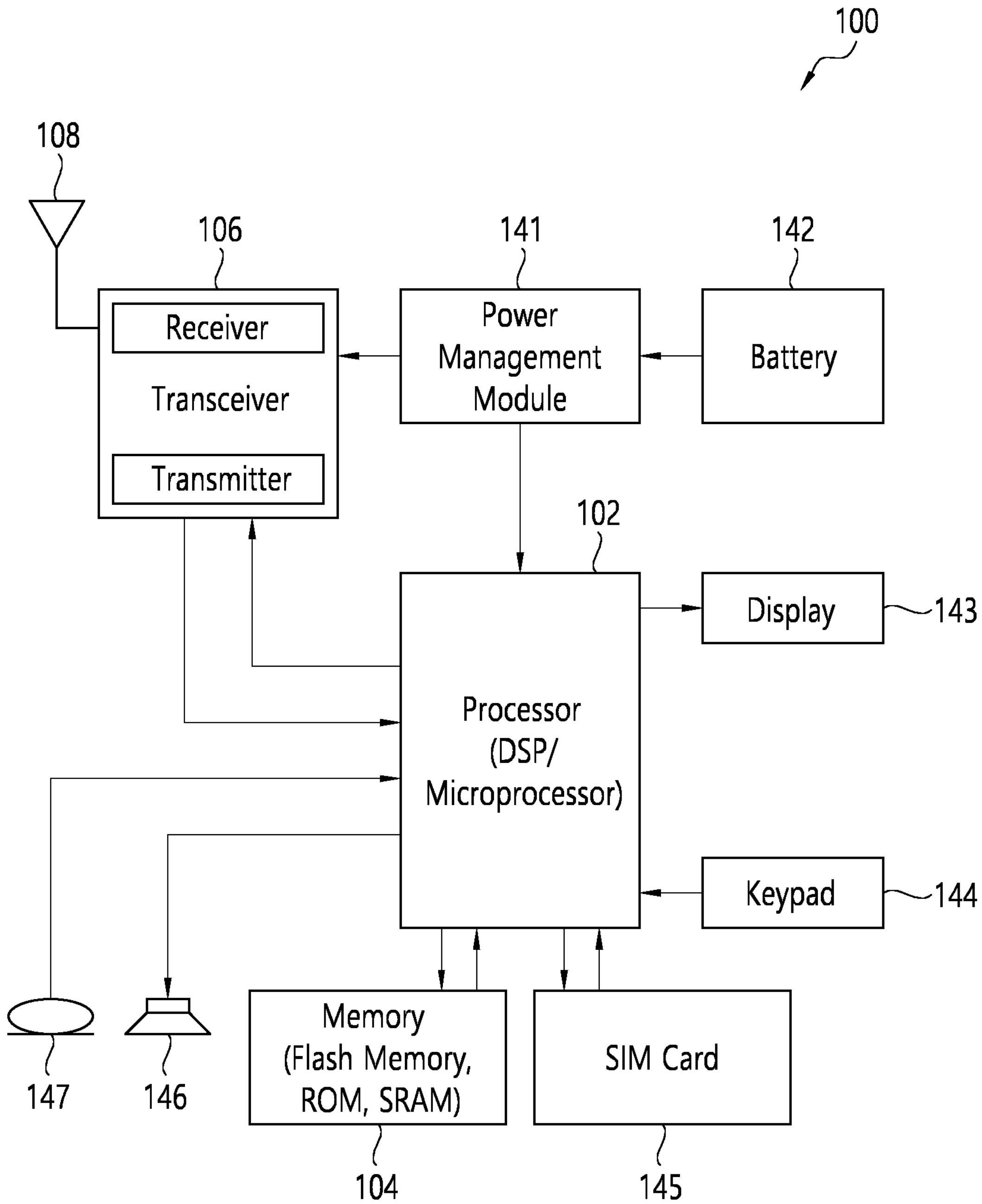
100
108
106
Receiver
Transceiver
Transmitter
141
Power
Management
Module
142
Battery
102
Processor
(DSP/
Microprocessor)
Display
143
Keypad
144
147
146
Memory
(Flash Memory,
ROM, SRAM)
104
SIM Card
145

FIG. 4

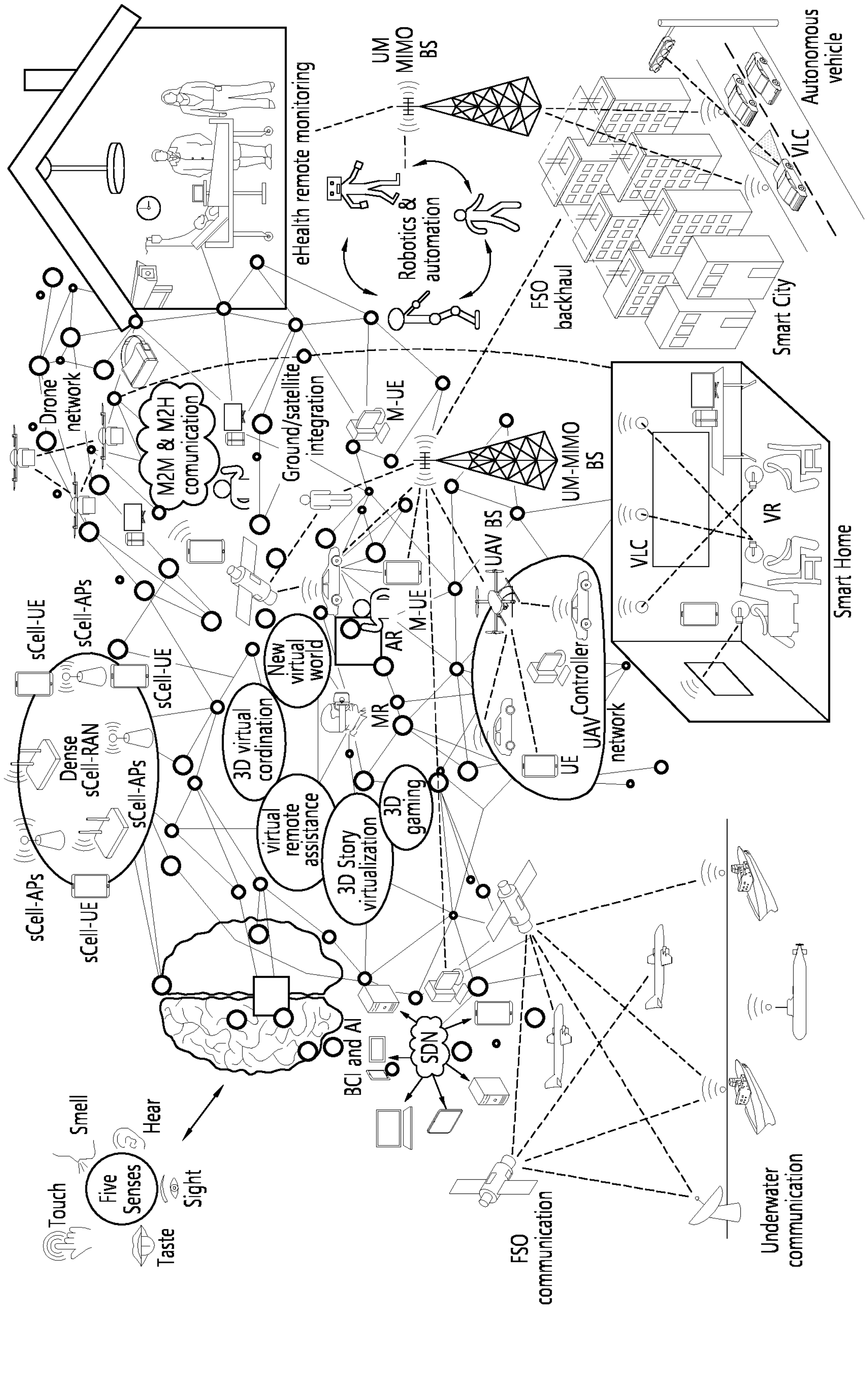

eHealth remote monitoring
UM MIMO BS
Robotics & automation
Autonomous vehicle
VLC
FSO backhaul
Smart City
Drone network
M2M & M2H comunication
Ground/satellite integration
M-UE
UM-MIMO BS
UAV BS
Smart Home
VLC
VR
sCell-UE
sCell-APs
sCell-UE
Dense sCell-RAN
sCell-APs
sCell-APs
sCell-UE
New virtual world
AR
M-UE
3D virtual cordination
MR
Controller
UAV network
UE
virtual remote assistance
3D Story virtualization
3D gaming
BCI and AI
SDN
Smell
Hear
Touch
Five Senses
Sight
Taste
FSO communication
Underwater communication

FIG. 5

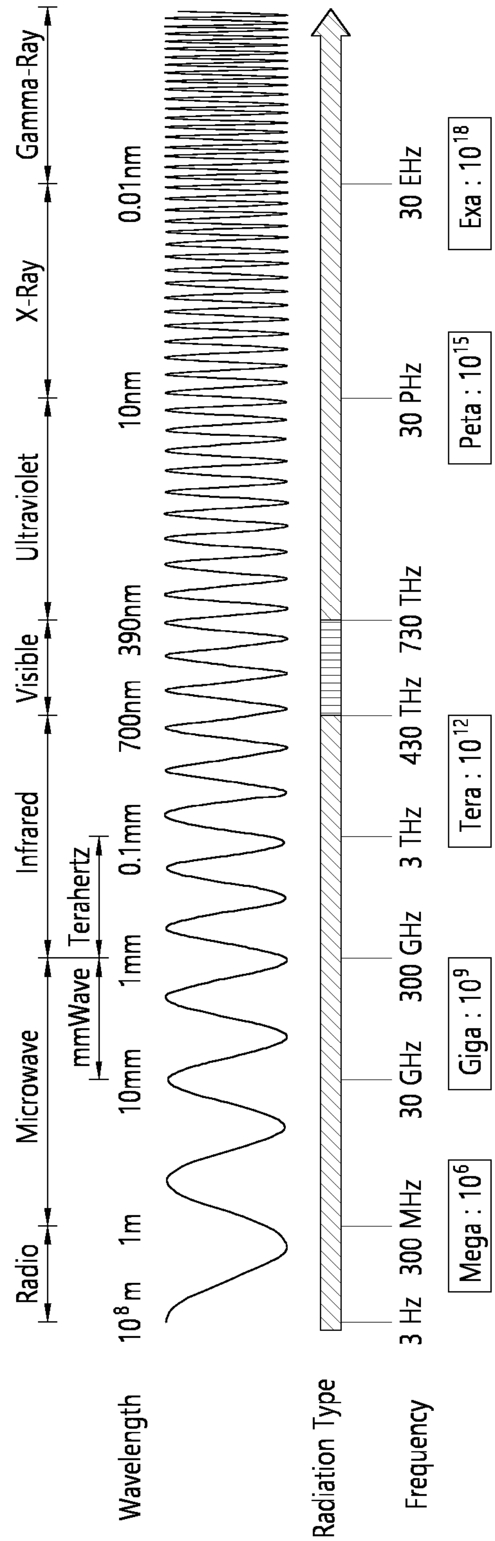
Wavelength
Radiation Type
Frequency
Radio
Microwave
Infrared
Visible
Ultraviolet
X-Ray
Gamma-Ray
mmWave
Terahertz
$10^8$ m
1m
10mm
1mm
0.1mm
700nm
390nm
10nm
0.01nm
3 Hz
300 MHz
30 GHz
300 GHz
3 THz
430 THz
730 THz
30 PHz
30 EHz
Mega : $10^6$
Giga : $10^9$
Tera : $10^{12}$
Peta : $10^{15}$
Exa : $10^{18}$

FIG. 6

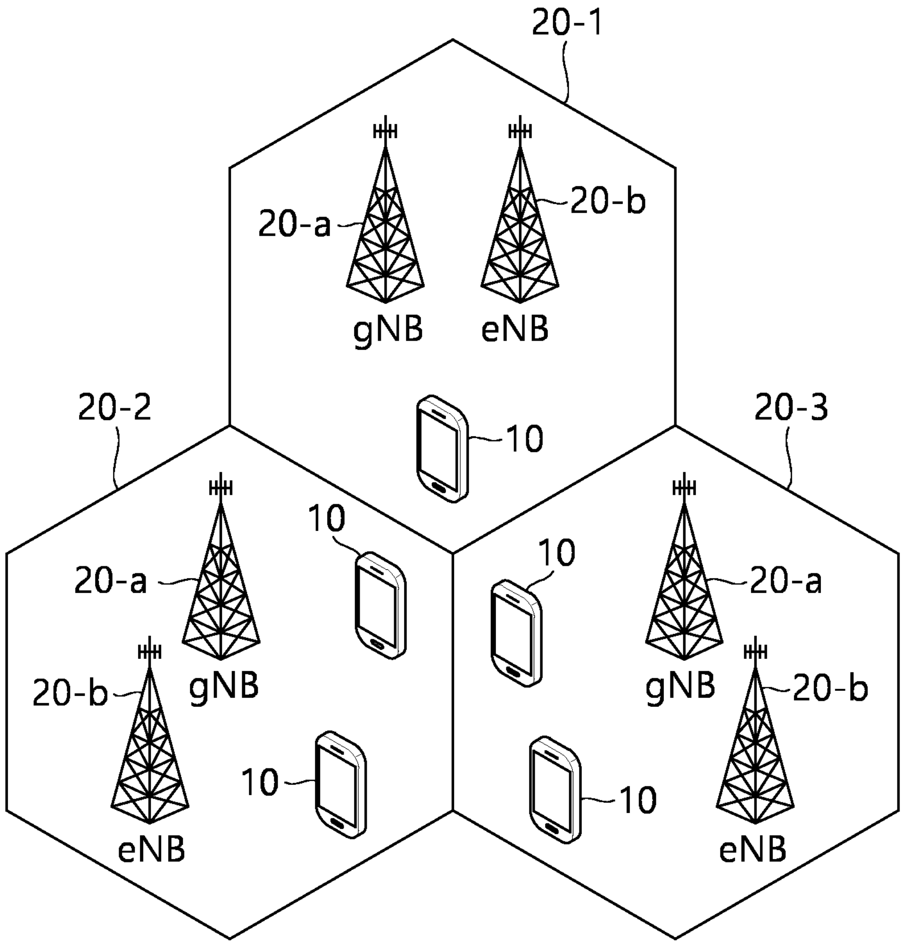
20-1
20-a
20-b
gNB
eNB
20-2
20-3
10
10
10
20-a
20-a
20-b
gNB
gNB
20-b
10
10
eNB
eNB

FIG. 7

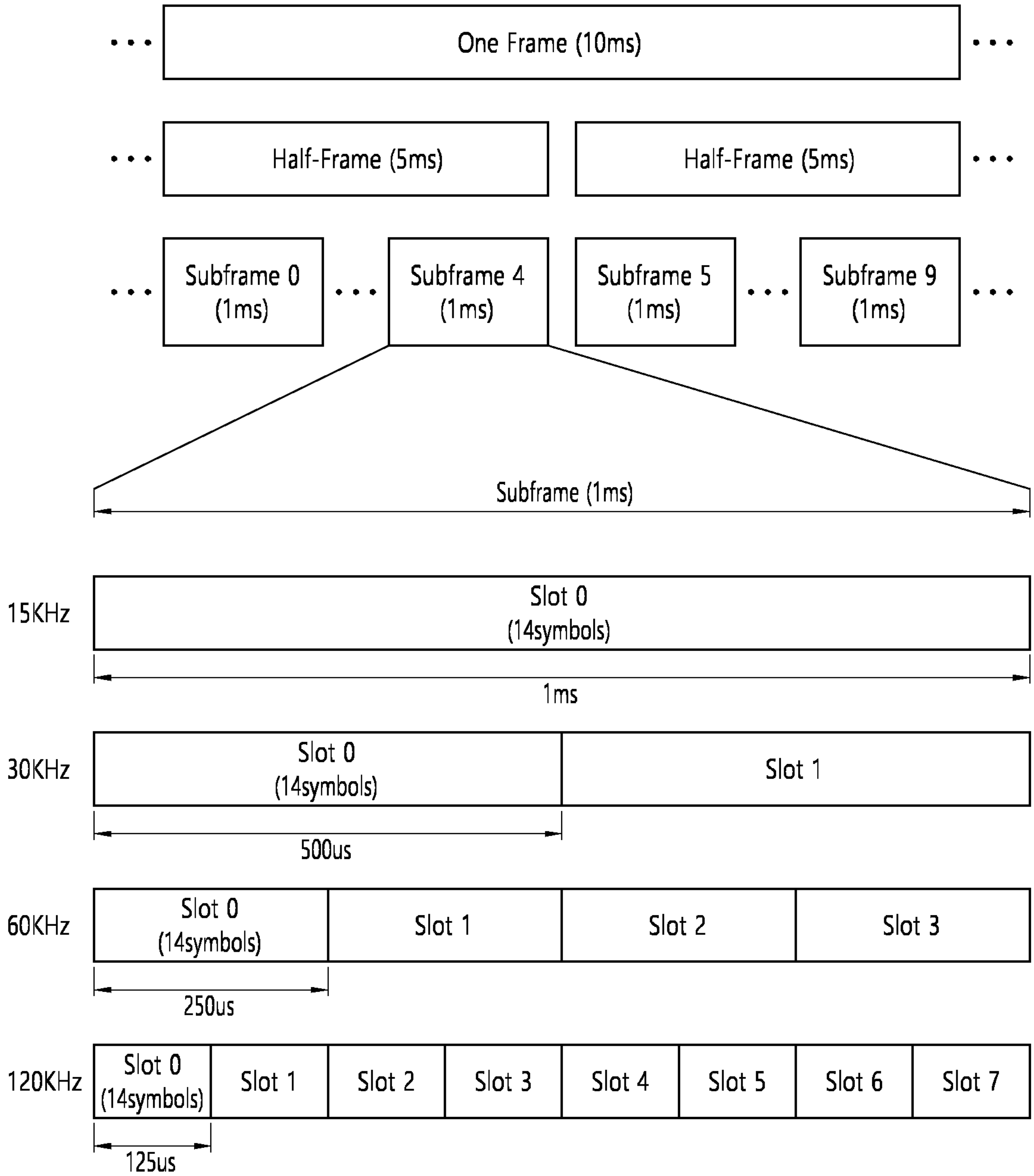
One Frame (10ms)
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot 0 (14symbols)
1ms
30KHz
Slot 0 (14symbols)
Slot 1
500us
60KHz
Slot 0 (14symbols)
Slot 1
Slot 2
Slot 3
250us
120KHz
Slot 0 (14symbols)
Slot 1
Slot 2
Slot 3
Slot 4
Slot 5
Slot 6
Slot 7
125us

FIG. 8

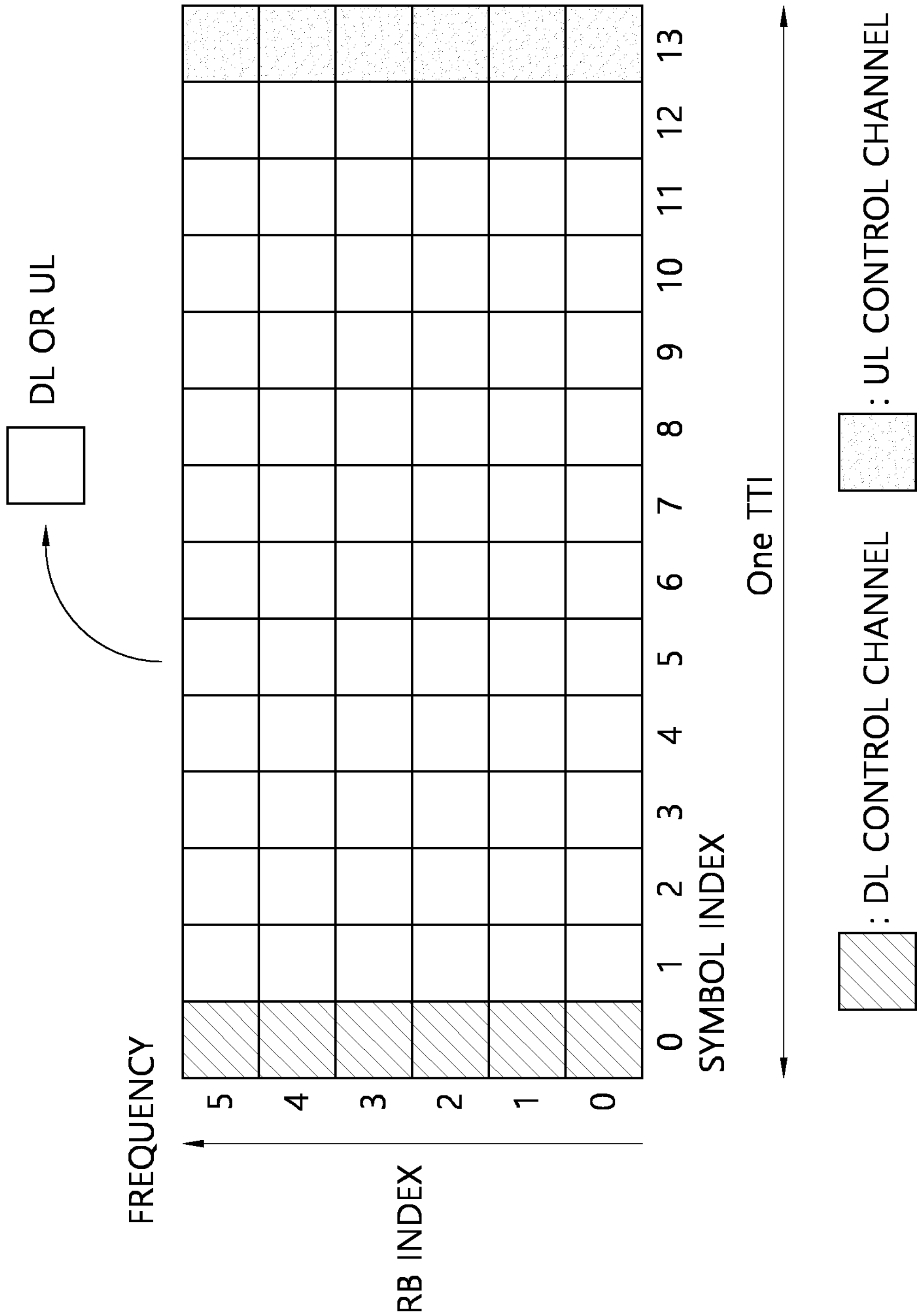
DL OR UL
RB INDEX
FREQUENCY
5
4
3
2
1
0
0 1 2 3 4 5 6 7 8 9 10 11 12 13
SYMBOL INDEX
One TTI
: DL CONTROL CHANNEL
: UL CONTROL CHANNEL

FIG. 9a

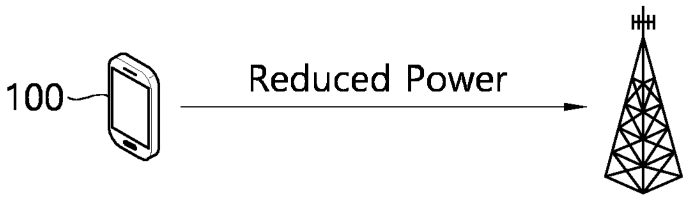


FIG. 9b

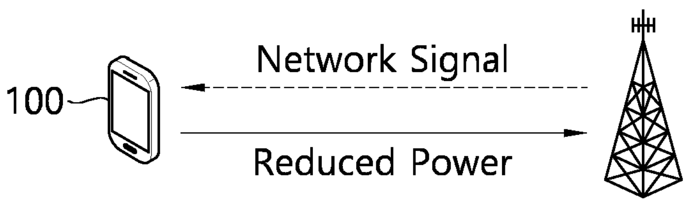

FIG. 10

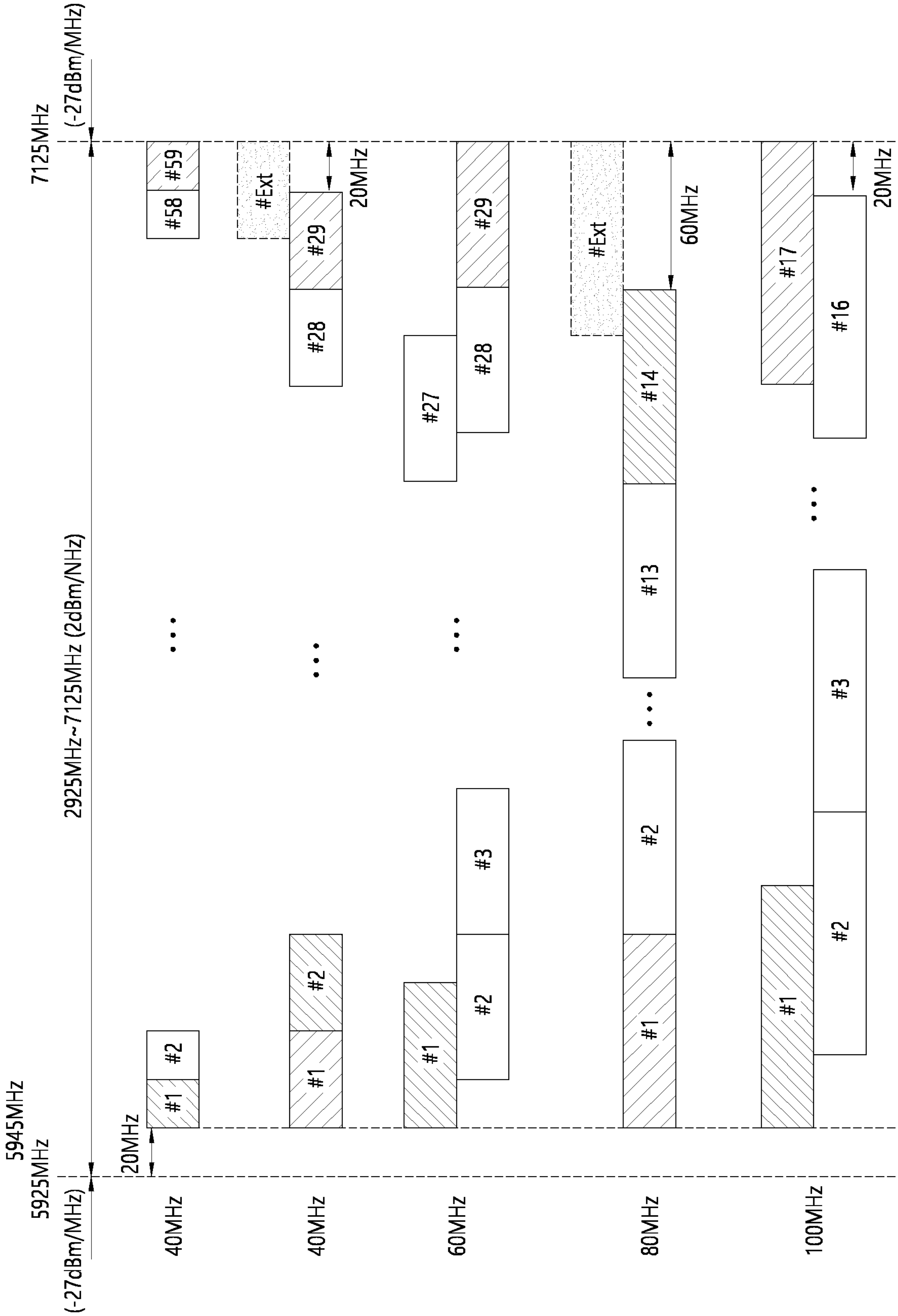
(-27dBm/MHz)
5925MHz
5945MHz
20MHz
2925MHz~7125MHz (2dBm/NHz)
7125MHz
(-27dBm/MHz)
40MHz
40MHz
60MHz
80MHz
100MHz
#1
#2
#3
#13
#14
#16
#17
#27
#28
#29
#58
#59
#Ext
20MHz
60MHz
20MHz

FIG. 11

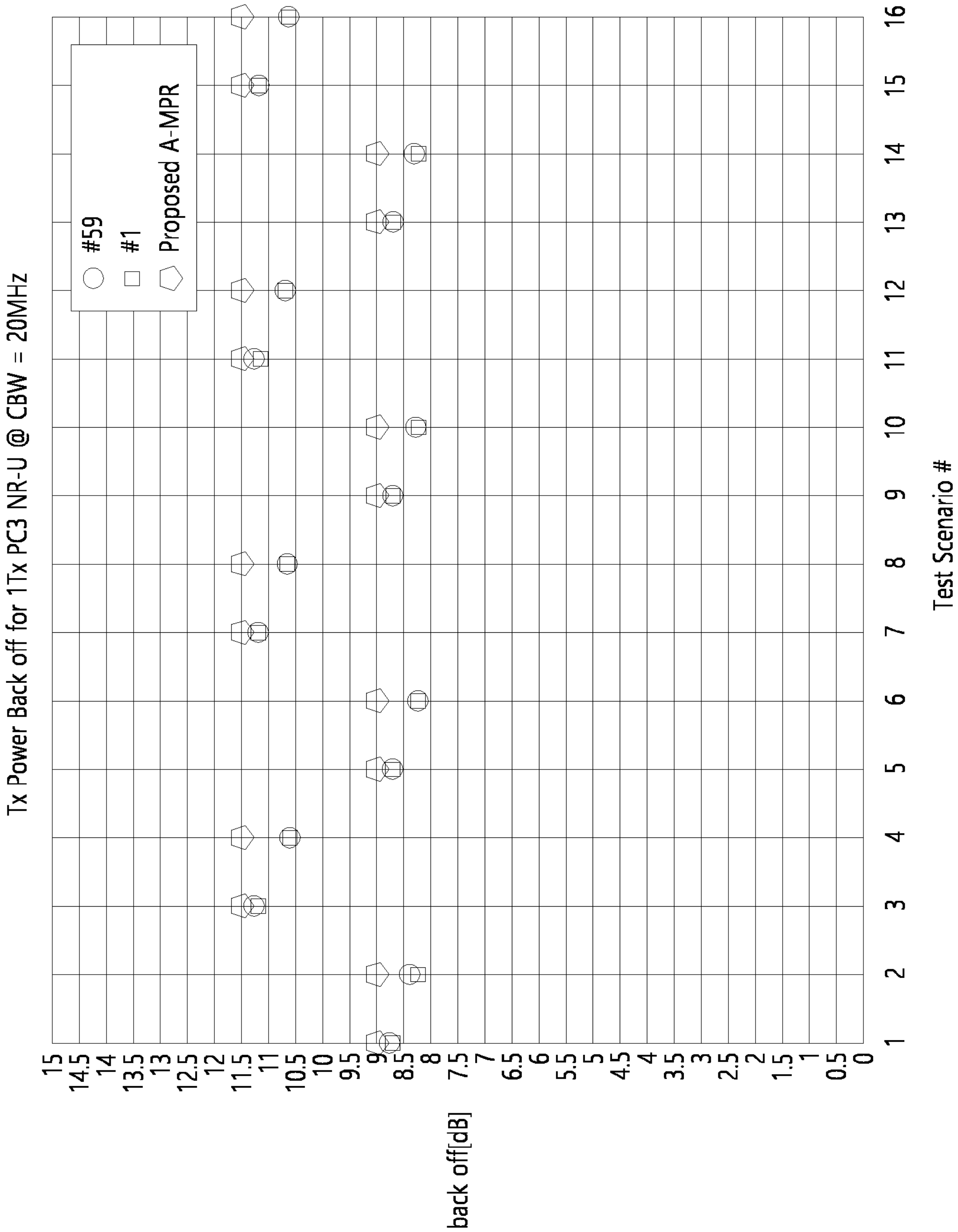

Tx Power Back off for 1Tx PC3 NR-U @ CBW = 20MHz
#59
#1
Proposed A-MPR
back off[dB]
Test Scenario #
15
14.5
14
13.5
13
12.5
12
11.5
11
10.5
10
9.5
9
8.5
8
7.5
7
6.5
6
5.5
5
4.5
4
3.5
3
2.5
2
1.5
1
0.5
0
1
2
3
4
5
6
7
8
9
10
11
12
13
14
15
16

FIG. 12

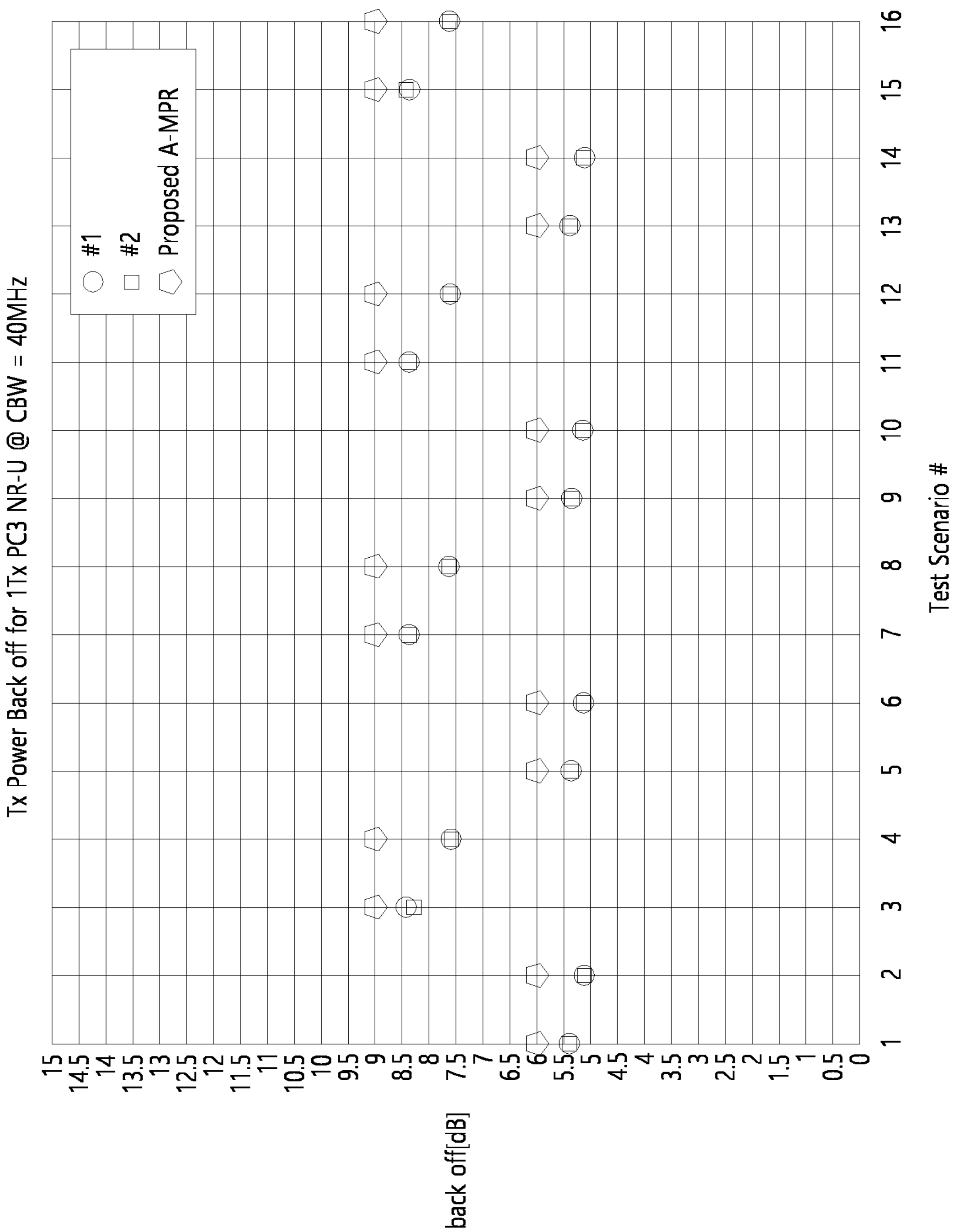
Tx Power Back off for 1Tx PC3 NR-U @ CBW = 40MHz
#1
#2
Proposed A-MPR
back off[dB]
15
14.5
14
13.5
13
12.5
12
11.5
11
10.5
10
9.5
9
8.5
8
7.5
7
6.5
6
5.5
5
4.5
4
3.5
3
2.5
2
1.5
1
0.5
0
1
2
3
4
5
6
7
8
9
10
11
12
13
14
15
16
Test Scenario #

FIG. 13

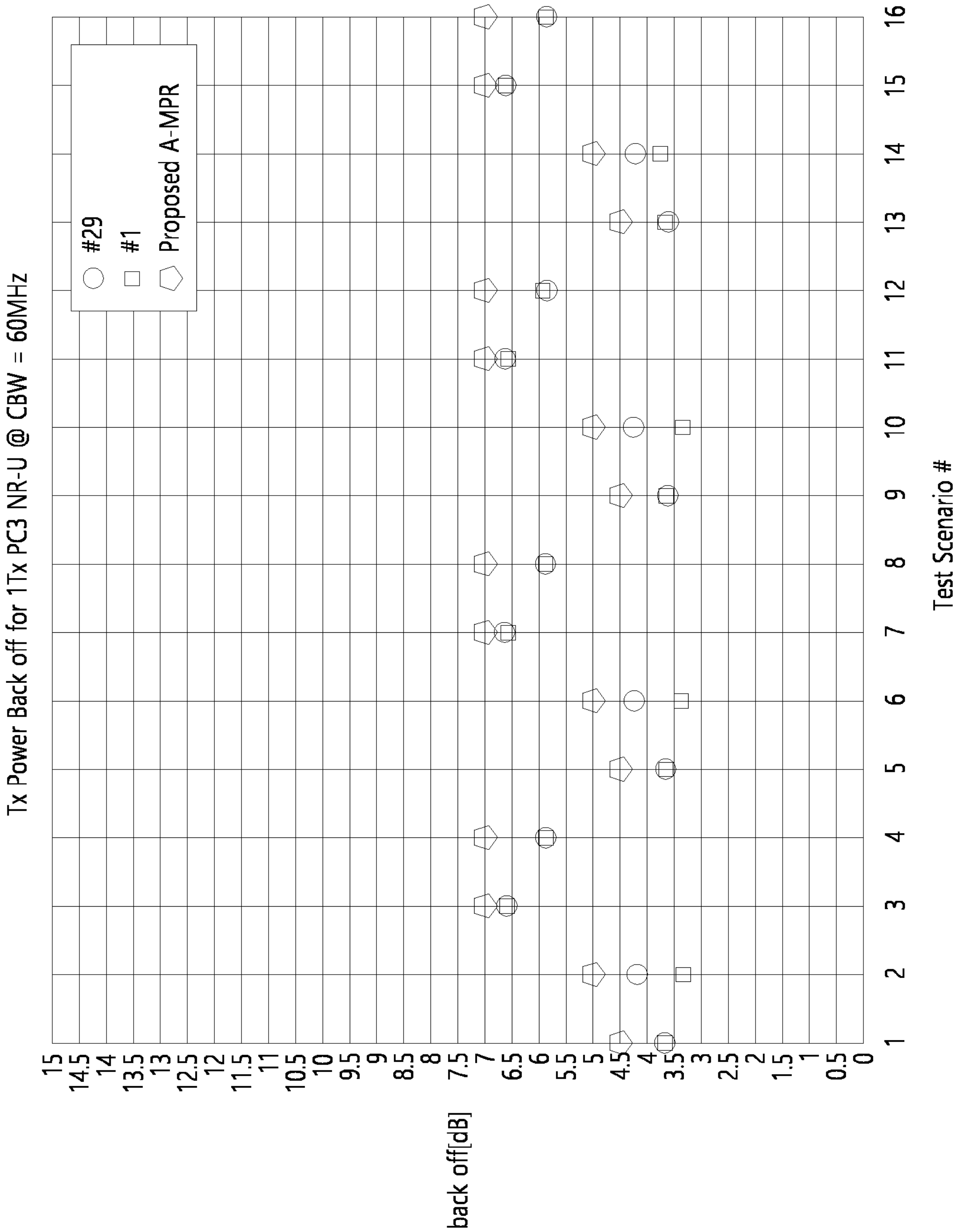
Tx Power Back off for 1Tx PC3 NR-U @ CBW = 60MHz
#29
#1
Proposed A-MPR
back off[dB]
Test Scenario #
15
14.5
14
13.5
13
12.5
12
11.5
11
10.5
10
9.5
9
8.5
8
7.5
7
6.5
6
5.5
5
4.5
4
3.5
3
2.5
2
1.5
1
0.5
0
1
2
3
4
5
6
7
8
9
10
11
12
13
14
15
16

FIG. 14

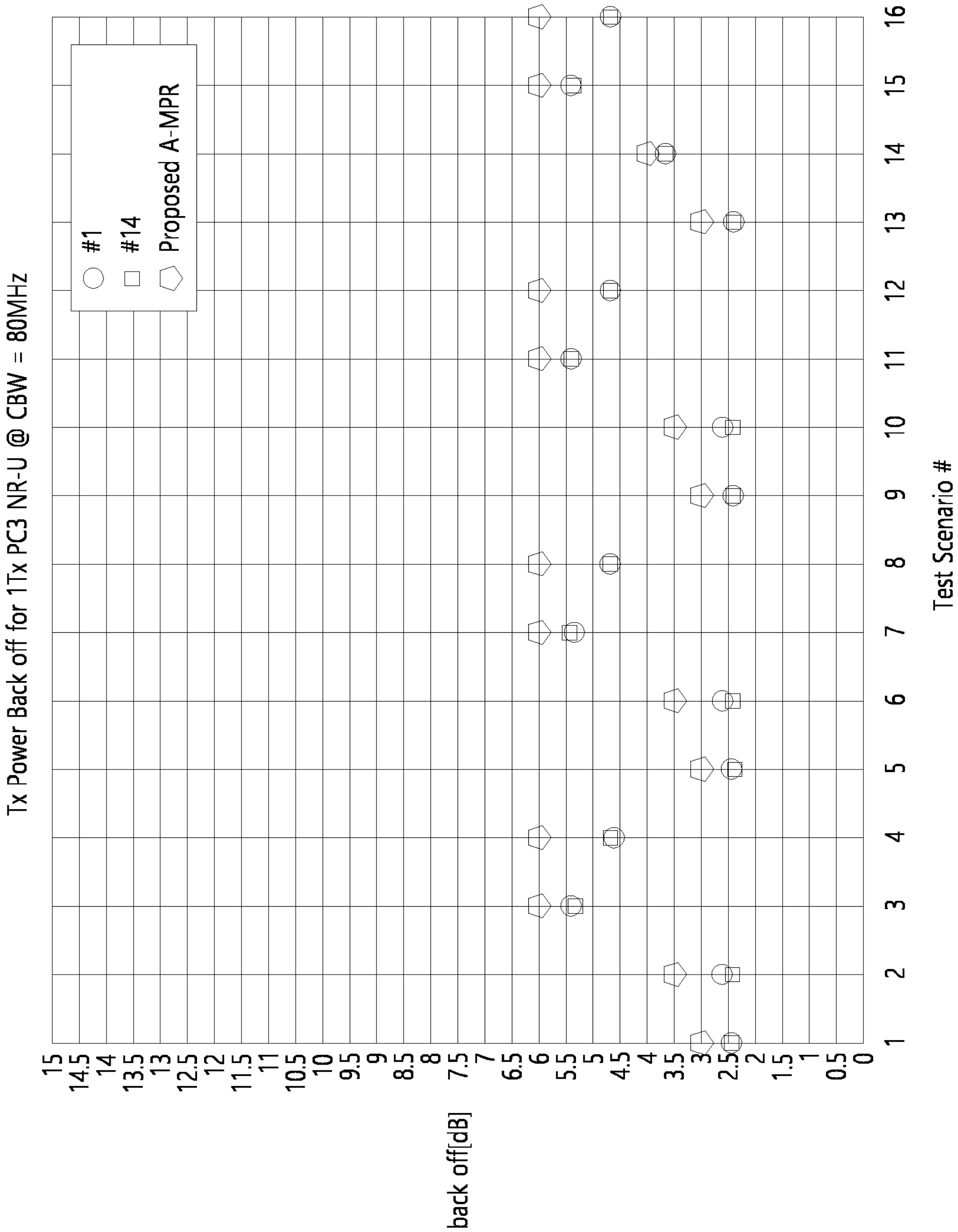
Tx Power Back off for 1Tx PC3 NR-U @ CBW = 80MHz
#1
#14
Proposed A-MPR
back off[dB]
Test Scenario #
0
0.5
1
1.5
2
2.5
3
3.5
4
4.5
5
5.5
6
6.5
7
7.5
8
8.5
9
9.5
10
10.5
11
11.5
12
12.5
13
13.5
14
14.5
15
1
2
3
4
5
6
7
8
9
10
11
12
13
14
15
16

FIG. 15

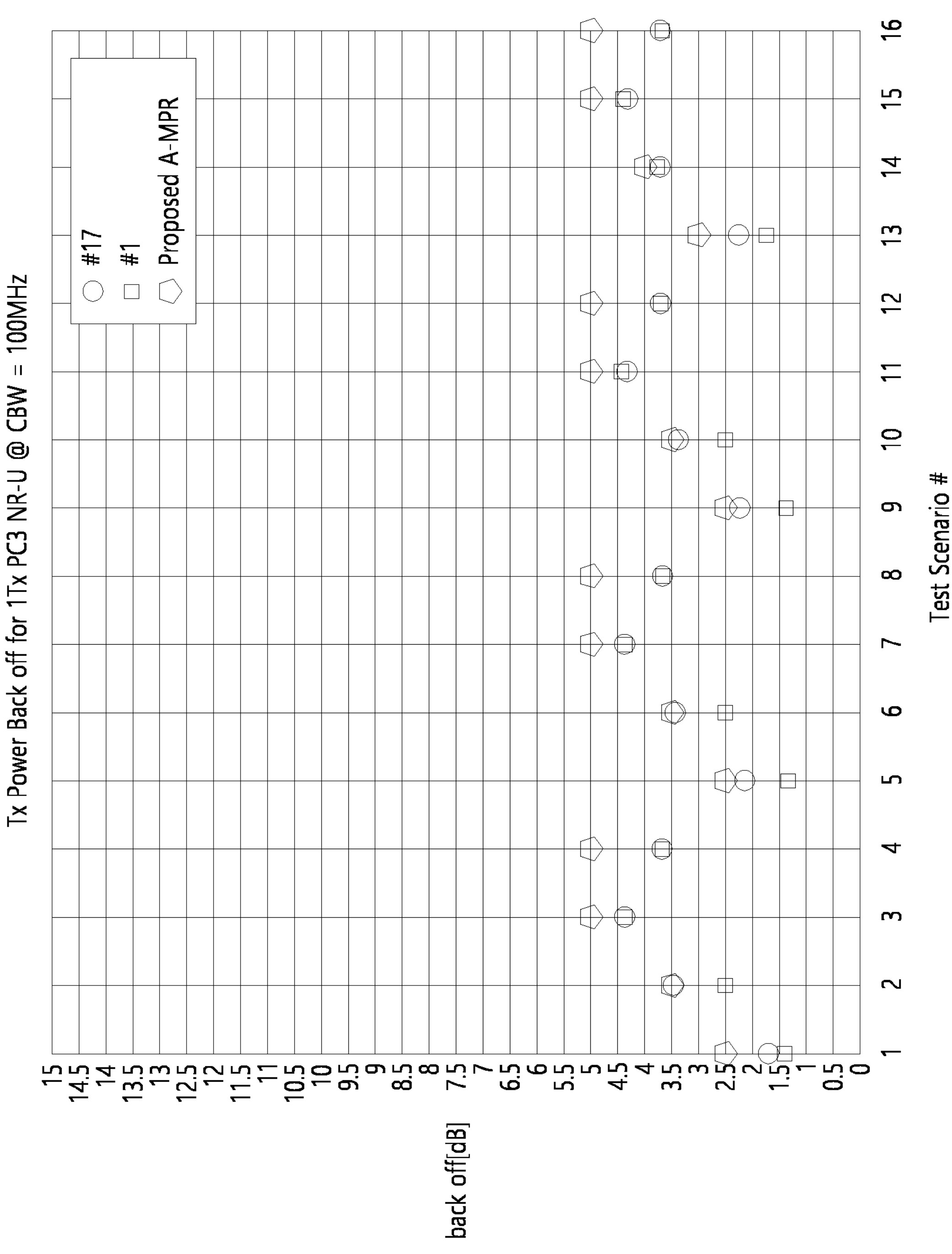
Tx Power Back off for 1Tx PC3 NR-U @ CBW = 100MHz
#17
#1
Proposed A-MPR
back off[dB]
Test Scenario #

FIG. 16

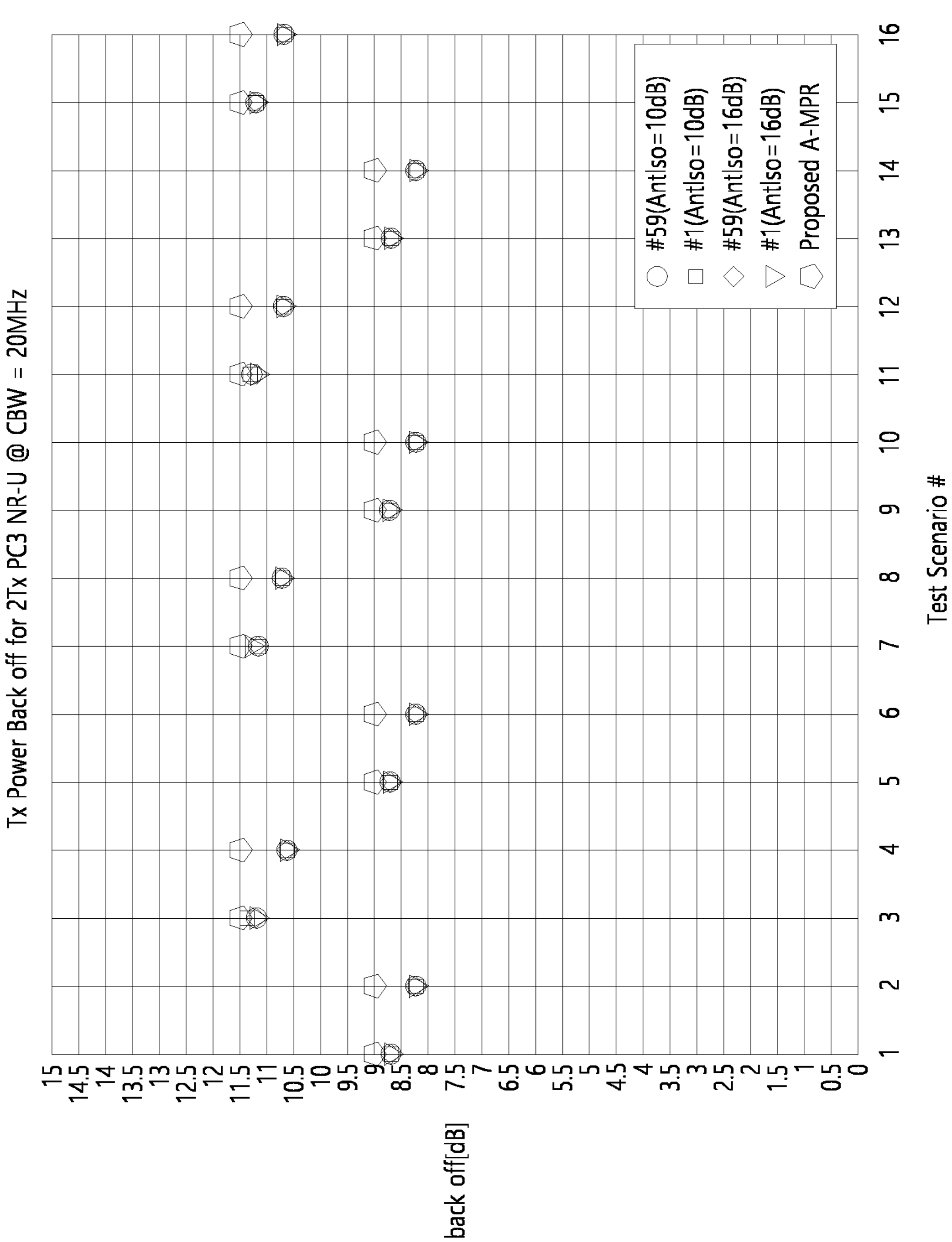
Tx Power Back off for 2Tx PC3 NR-U @ CBW = 20MHz
back off[dB]
Test Scenario #
#59(AntIso=10dB)
#1(AntIso=10dB)
#59(AntIso=16dB)
#1(AntIso=16dB)
Proposed A-MPR

FIG. 17

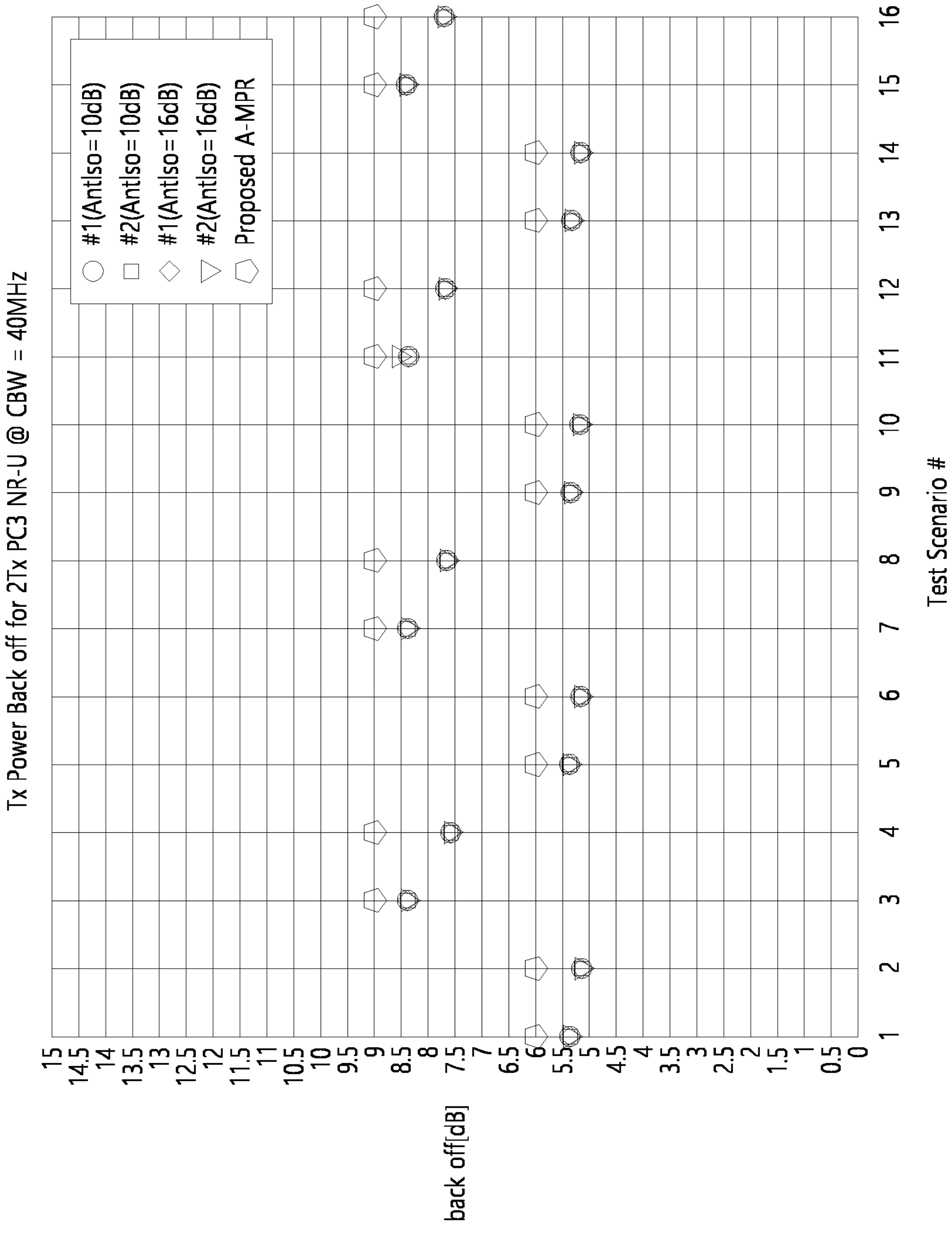
Tx Power Back off for 2Tx PC3 NR-U @ CBW = 40MHz
#1(AntIso=10dB)
#2(AntIso=10dB)
#1(AntIso=16dB)
#2(AntIso=16dB)
Proposed A-MPR
back off[dB]
Test Scenario #
15
14.5
14
13.5
13
12.5
12
11.5
11
10.5
10
9.5
9
8.5
8
7.5
7
6.5
6
5.5
5
4.5
4
3.5
3
2.5
2
1.5
1
0.5
0
1
2
3
4
5
6
7
8
9
10
11
12
13
14
15
16

FIG. 18

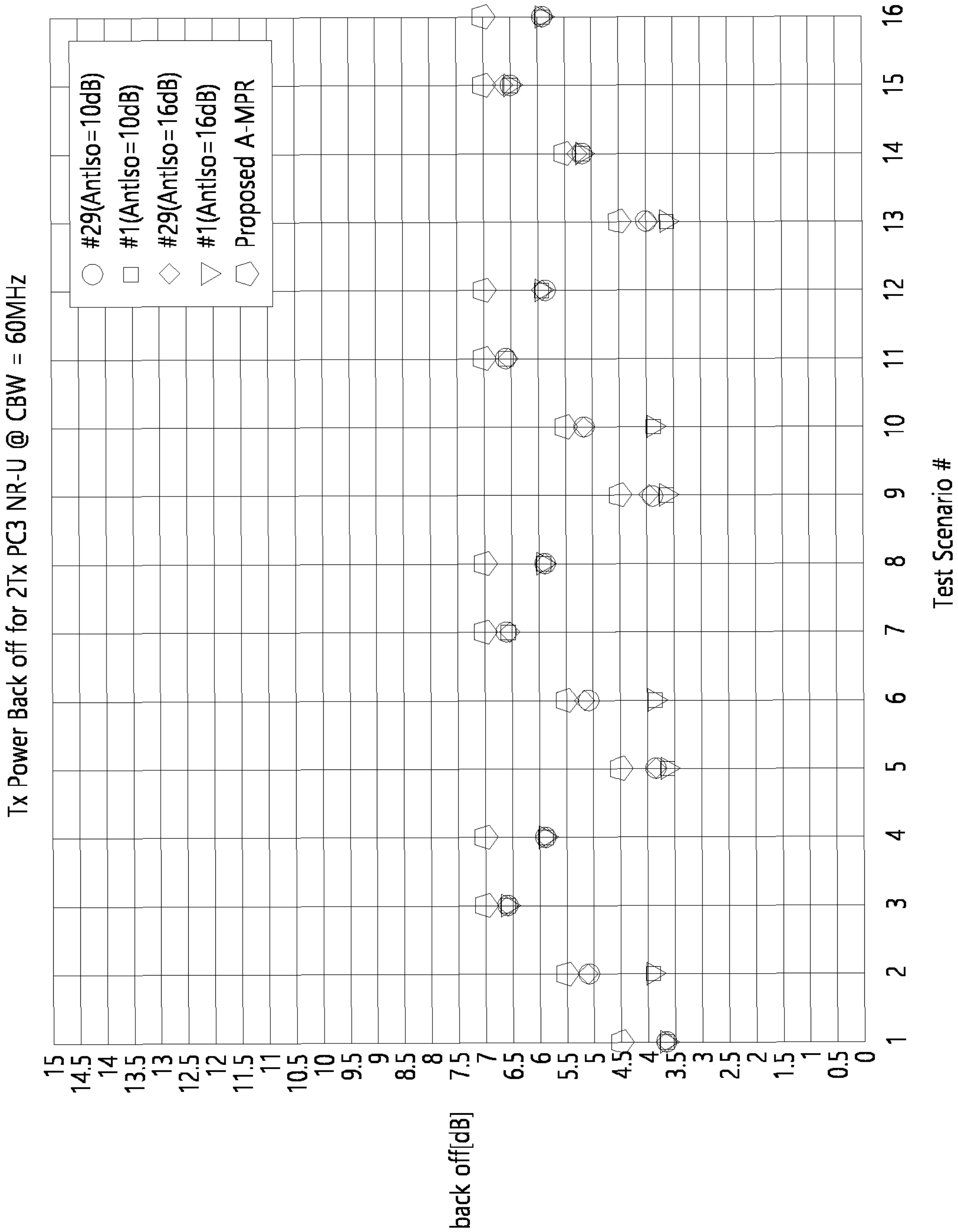
Tx Power Back off for 2Tx PC3 NR-U @ CBW = 60MHz
#29(AntIso=10dB)
#1(AntIso=10dB)
#29(AntIso=16dB)
#1(AntIso=16dB)
Proposed A-MPR
back off[dB]
15
14.5
14
13.5
13
12.5
12
11.5
11
10.5
10
9.5
9
8.5
8
7.5
7
6.5
6
5.5
5
4.5
4
3.5
3
2.5
2
1.5
1
0.5
0
1
2
3
4
5
6
7
8
9
10
11
12
13
14
15
16
Test Scenario #

FIG. 19

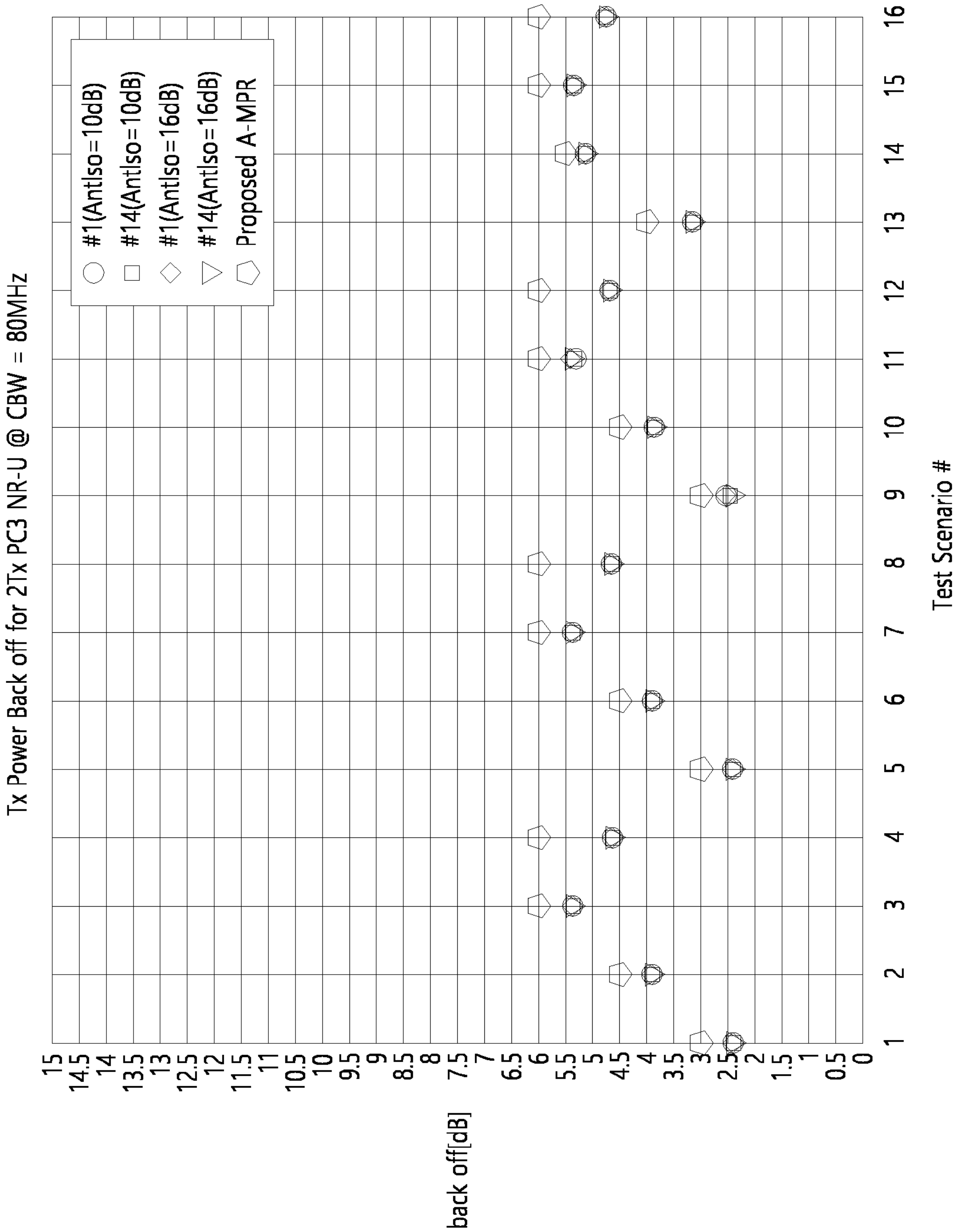
Tx Power Back off for 2Tx PC3 NR-U @ CBW = 80MHz
#1(AntIso=10dB)
#14(AntIso=10dB)
#1(AntIso=16dB)
#14(AntIso=16dB)
Proposed A-MPR
back off[dB]
Test Scenario #

FIG. 20

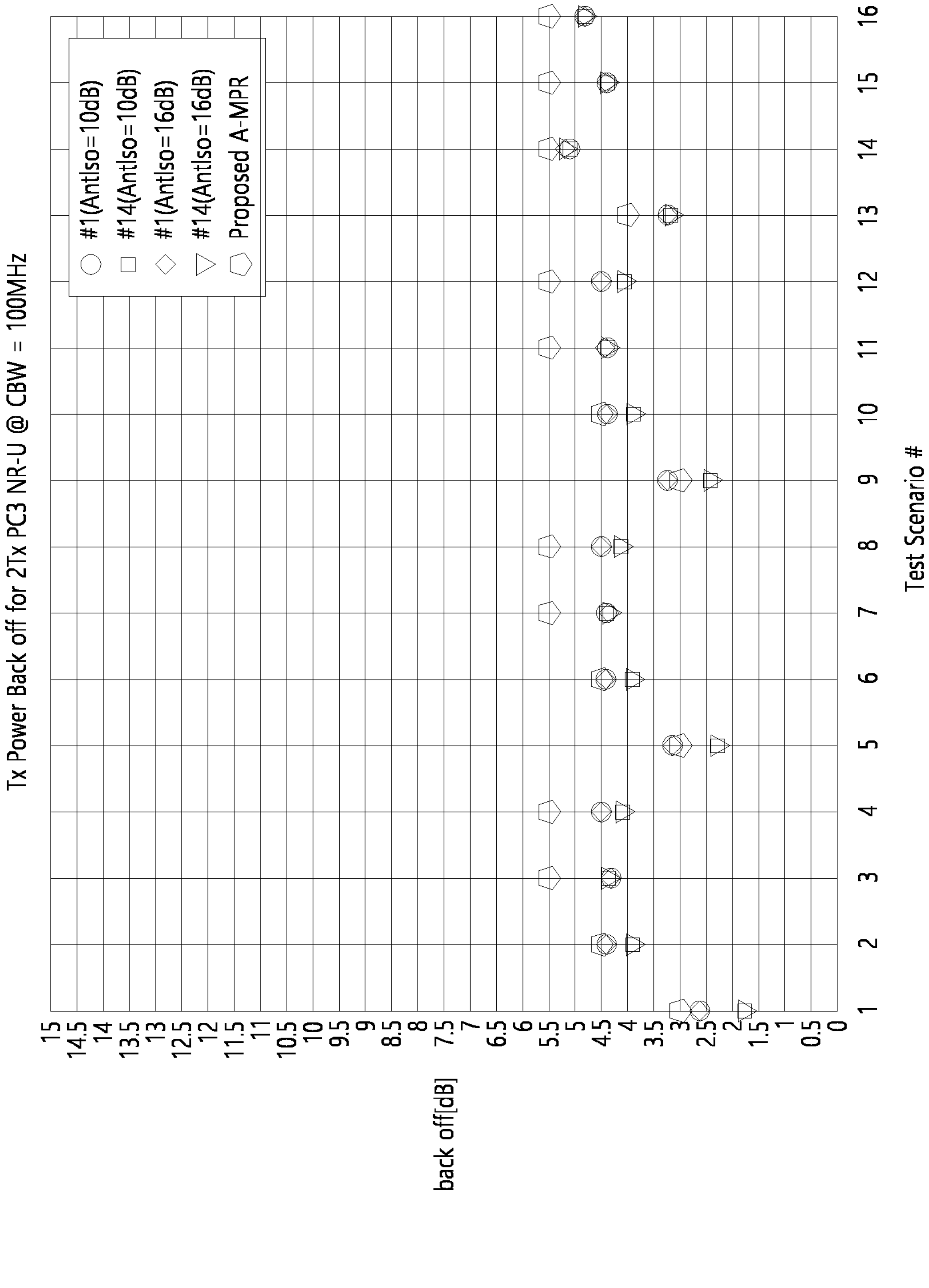
Tx Power Back off for 2Tx PC3 NR-U @ CBW = 100MHz
#1(AntIso=10dB)
#14(AntIso=10dB)
#1(AntIso=16dB)
#14(AntIso=16dB)
Proposed A-MPR
back off[dB]
Test Scenario #
15
14.5
14
13.5
13
12.5
12
11.5
11
10.5
10
9.5
9
8.5
8
7.5
7
6.5
6
5.5
5
4.5
4
3.5
3
2.5
2
1.5
1
0.5
0
1
2
3
4
5
6
7
8
9
10
11
12
13
14
15
16

FIG. 21

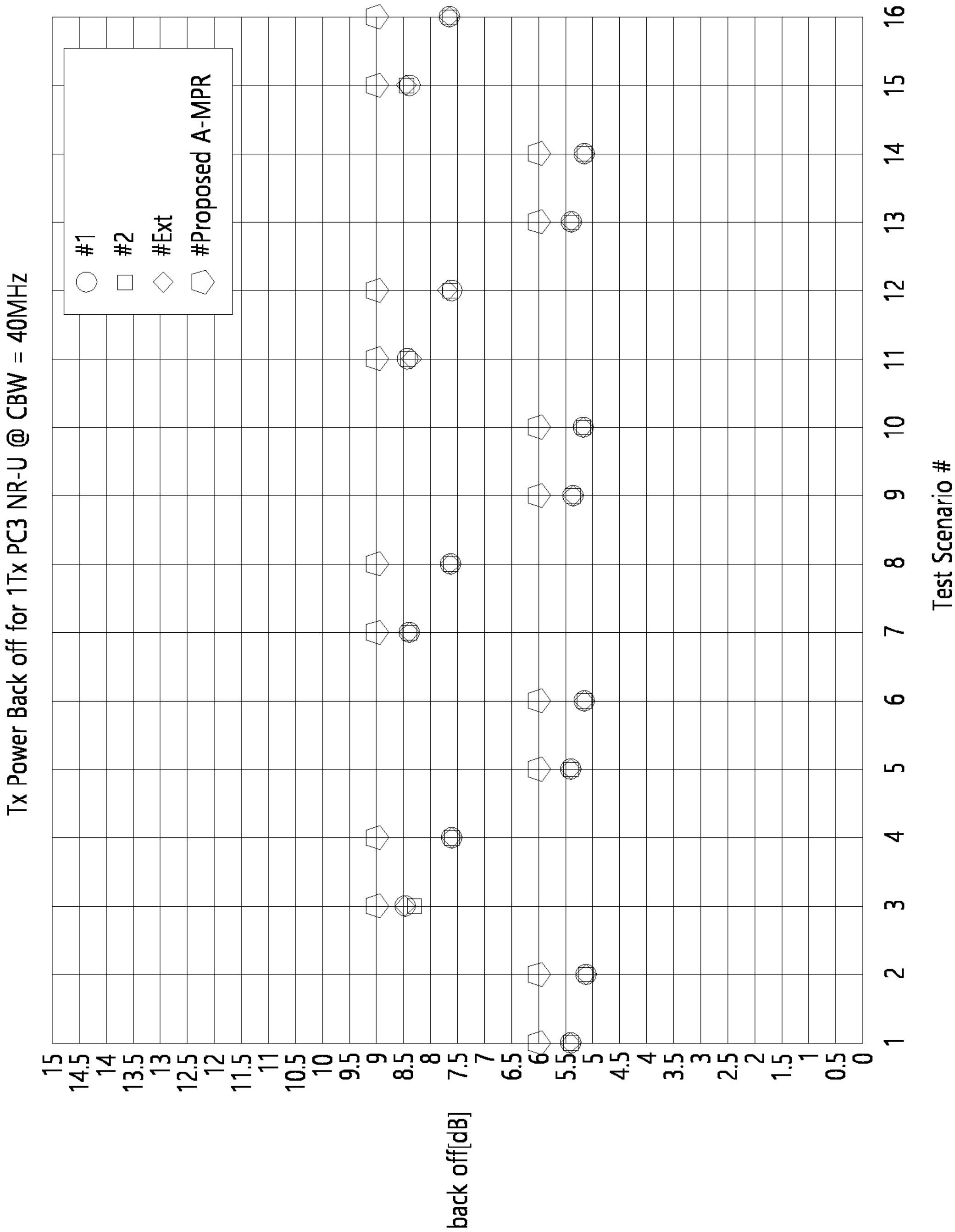
Tx Power Back off for 1Tx PC3 NR-U @ CBW = 40MHz
#1
#2
#Ext
#Proposed A-MPR
back off[dB]
15
14.5
14
13.5
13
12.5
12
11.5
11
10.5
10
9.5
9
8.5
8
7.5
7
6.5
6
5.5
5
4.5
4
3.5
3
2.5
2
1.5
1
0.5
0
Test Scenario #
1
2
3
4
5
6
7
8
9
10
11
12
13
14
15
16

FIG. 22

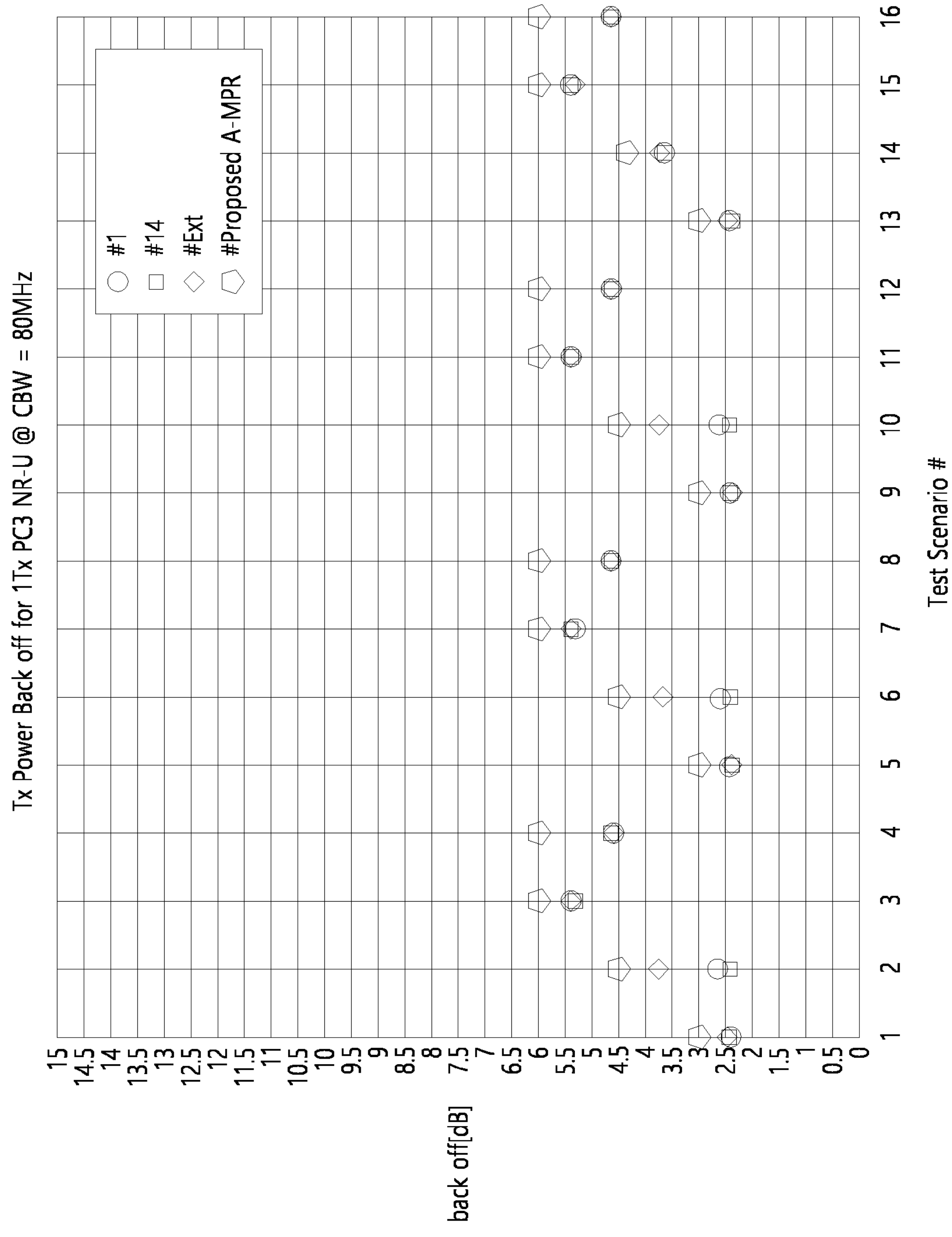
Tx Power Back off for 1Tx PC3 NR-U @ CBW = 80MHz
back off[dB]
Test Scenario #
#1
#14
#Ext
#Proposed A-MPR
15
14.5
14
13.5
13
12.5
12
11.5
11
10.5
10
9.5
9
8.5
8
7.5
7
6.5
6
5.5
5
4.5
4
3.5
3
2.5
2
1.5
1
0.5
0
1
2
3
4
5
6
7
8
9
10
11
12
13
14
15
16

FIG. 23

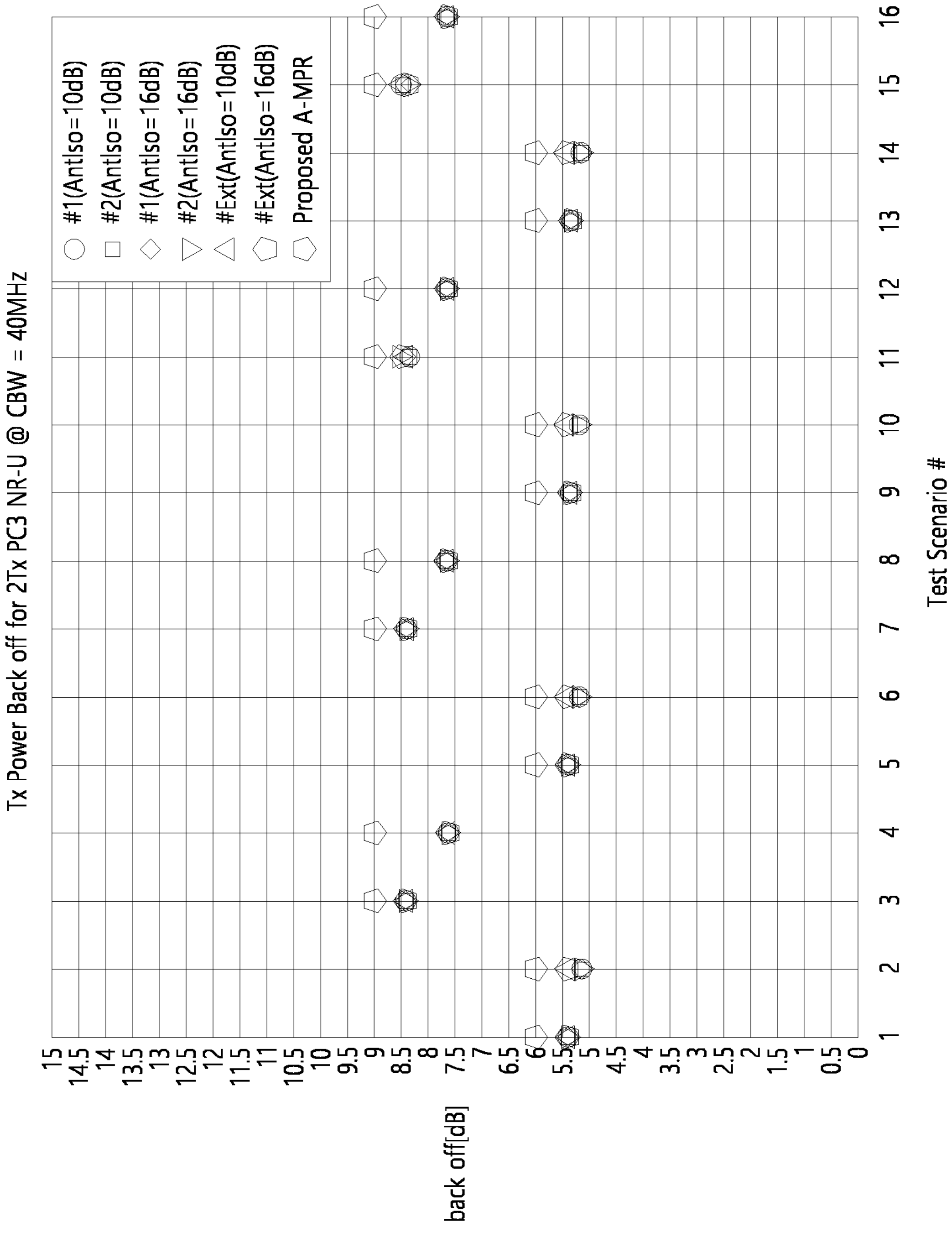
Tx Power Back off for 2Tx PC3 NR-U @ CBW = 40MHz
#1(AntIso=10dB)
#2(AntIso=10dB)
#1(AntIso=16dB)
#2(AntIso=16dB)
#Ext(AntIso=10dB)
#Ext(AntIso=16dB)
Proposed A-MPR
back off[dB]
Test Scenario #
0
0.5
1
1.5
2
2.5
3
3.5
4
4.5
5
5.5
6
6.5
7
7.5
8
8.5
9
9.5
10
10.5
11
11.5
12
12.5
13
13.5
14
14.5
15
1
2
3
4
5
6
7
8
9
10
11
12
13
14
15
16

FIG. 24

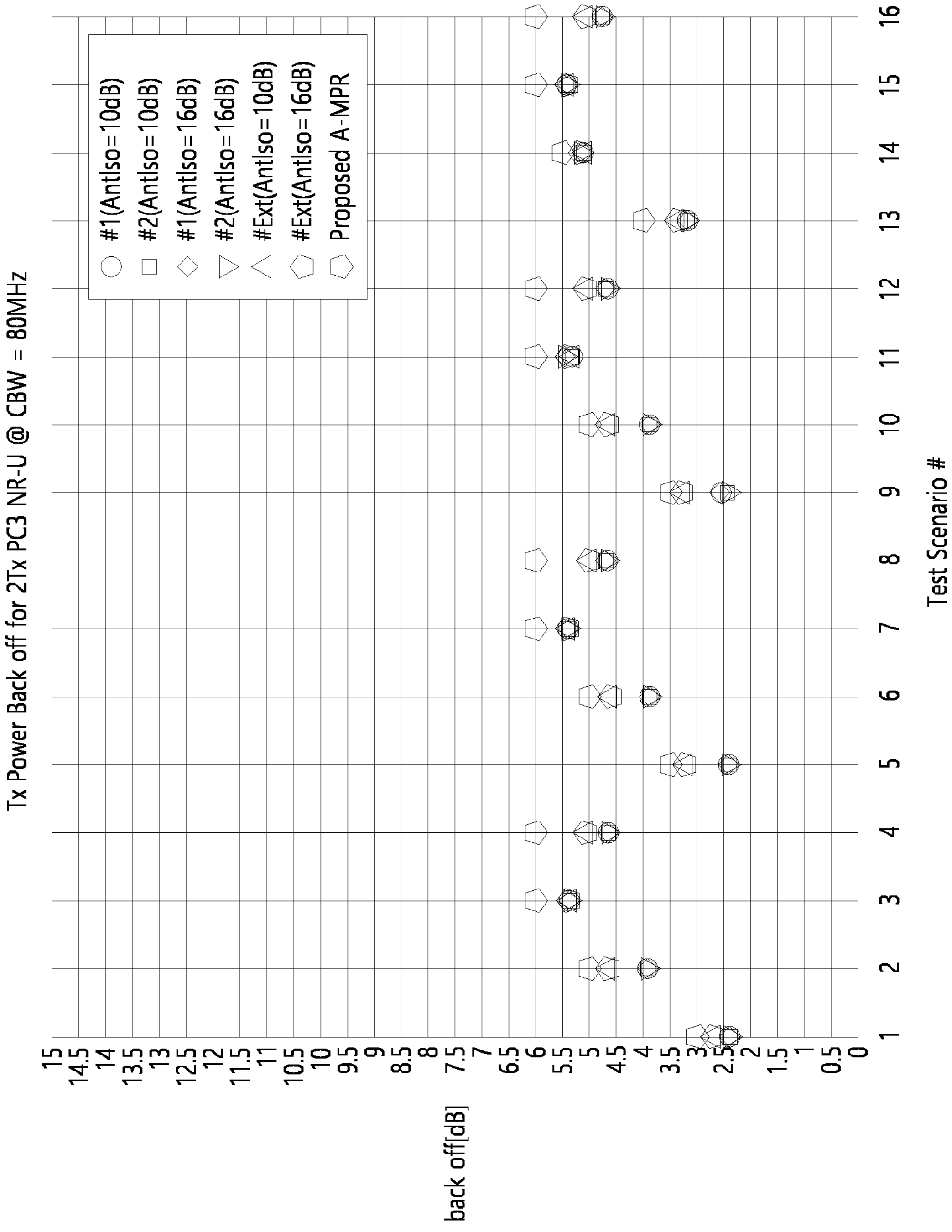
Tx Power Back off for 2Tx PC3 NR-U @ CBW = 80MHz
back off[dB]
Test Scenario #
#1(AntIso=10dB)
#2(AntIso=10dB)
#1(AntIso=16dB)
#2(AntIso=16dB)
#Ext(AntIso=10dB)
#Ext(AntIso=16dB)
Proposed A-MPR
0
0.5
1
1.5
2
2.5
3
3.5
4
4.5
5
5.5
6
6.5
7
7.5
8
8.5
9
9.5
10
10.5
11
11.5
12
12.5
13
13.5
14
14.5
15
1
2
3
4
5
6
7
8
9
10
11
12
13
14
15
16

FIG. 25

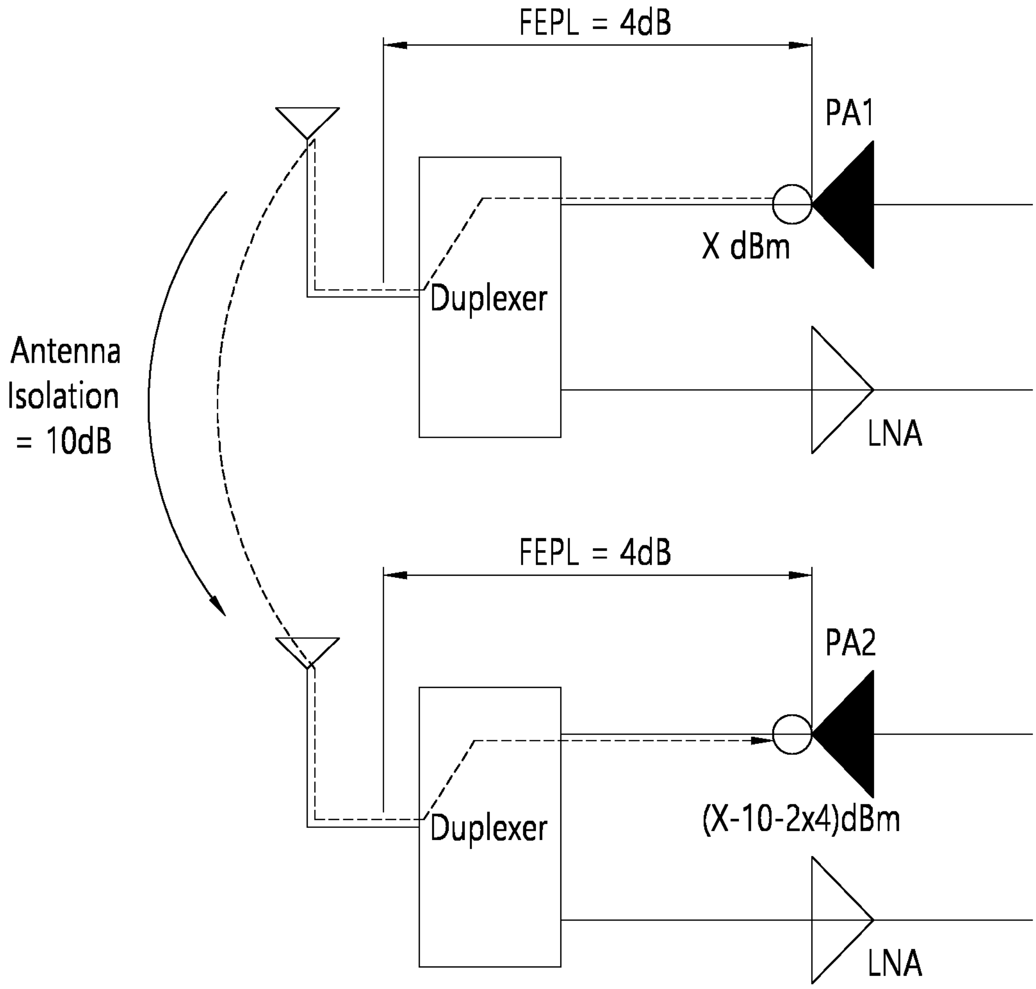
FEPL = 4dB
PA1
X dBm
Duplexer
LNA
Antenna
Isolation
= 10dB
FEPL = 4dB
PA2
(X-10-2x4)dBm
Duplexer
LNA

FIG. 26

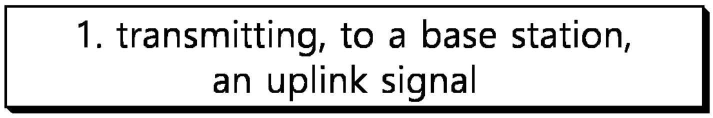
1. transmitting, to a base station,
an uplink signal

FIG. 27

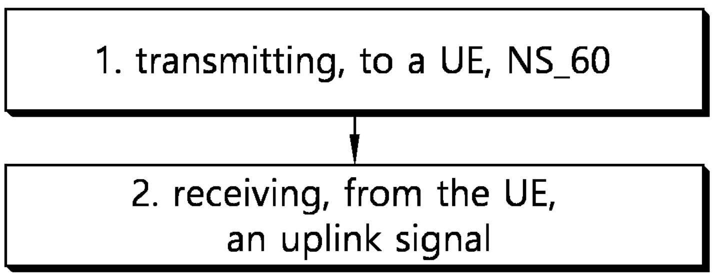
1. transmitting, to a UE, NS_60
2. receiving, from the UE,
an uplink signal

## INTERNATIONAL SEARCH REPORT

International application No.
**PCT/KR2023/015042**

**A. CLASSIFICATION OF SUBJECT MATTER**

**H04W 52/26**(2009.01)i; **H04W 52/34**(2009.01)i

According to International Patent Classification (IPC) or to both national classification and IPC

**B. FIELDS SEARCHED**

Minimum documentation searched (classification system followed by classification symbols)

H04W 52/26(2009.01); H04W 76/16(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파워클래스 3(power class 3), A-MPR, 업링크(uplink), NS_60

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | 3GPP; TSGRAN; NR; User Equipment (UE) radio transmission and reception; Part 1: Range 1 Standalone (Release 17). 3GPP TS 38.101-1 V17.6.0. 30 June 2022.<br>See pages 23, 74, 241-244, 278 and 370 and tables 6.2.3.2-2, 6.2.3.4-1, 6.2.3.4-2, 6.2.3.19-1, 6.2.3.19-2, 6.2.3.19-4, 6.2A.2.1-2 and 6.2F.3.10-1. | 1,15,18-19<br>2-5,13-14,16-17<br>6-12 |
| Y | CHARTER COMMUNICATIONS et al. Discussion on UE RF requirements for SP and LPI for introduction of Power Class 3. R4-2211586, 3GPP TSG-RAN WG4 Meeting #104-e. 10 August 2022.<br>See pages 1-10. | 2-5,13-14,16-17 |
| A | MCC et al. Big CR for 38.101-1 maintenance part2 (Rel-17). R4-2215243, 3GPP TSG-RAN WG4 Meeting #104-e. 02 September 2022.<br>See pages 1-25. | 1-19 |
| A | HUAWEI et al. On Power Class Ambiguity and New Power Limit for NR inter-band CA. R4-2204082, 3GPP TSG-RAN WG4 Meeting #102-e. 14 February 2022.<br>See pages 1-7. | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 January 2024** | **05 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

**INTERNATIONAL SEARCH REPORT**

International application No.
**PCT/KR2023/015042**

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0066304 A (LG ELECTRONICS INC.) 24 May 2022 (2022-05-24)<br>See paragraphs [0109]-[0224] and figures 6a-6b. | 1-19 |

Form PCT/ISA/210 (second sheet) (July 2022)

**INTERNATIONAL SEARCH REPORT**
**Information on patent family members**

International application No.
**PCT/KR2023/015042**

| Patent document cited in search report | Publication date (day/month/year) | Patent family member(s) | Publication date (day/month/year) |
|---|---|---|---|
| KR 10-2022-0066304 A | 24 May 2022 | US 2022-0346036 A1 | 27 October 2022 |
| | | WO 2021-066505 A1 | 08 April 2021 |

Form PCT/ISA/210 (patent family annex) (July 2022)